# EUROPEAN PATENT APPLICATION

(11) **EP 4 790 943 A1**
(43) Date of publication of application: **12.08.2026**
(21) Application number: 26156785.3
(22) Date of filing: 06.02.2026
(51) Int. Cl.: H04L 5/00

(54) **METHOD AND APPARATUS FOR COMMUNICATION OPERATION**

(30) Priority: 06.02.2025 US 202563754584 P
(71) Applicant: Industrial Technology Research Institute, 310401 Hsinchu (TW)
(72) Inventor: Hsieh, Chia-Wen, 600 Chiayi City (TW); Lee, Chien-Min, 324 Taoyuan City (TW); Lo, Li-Chung, 407 Taichung City (TW)
(74) Representative: Becker Kurig & Partner Patentanwälte mbB

(57) **Abstract**

A method and a device for communication operation are provided. In the method, a first signaling for activating a first transmission of a first Synchronization Signal/Physical Broadcast Channel Block, SSB, is received, and the first transmission of the first SSB is received according to the first signaling.

## Description

### TECHNICAL FIELD

The present disclosure relates to wireless communication technology, and more particularly, to methods and apparatuses for communication operation.

### BACKGROUND

With the evolution of wireless communication technologies, such as 5G New Radio (NR), demands for network performance and energy efficiency are increasing. In a Carrier Aggregation (CA) architecture, a User Equipment (UE) in an RRC_CONNECTED state may be configured with multiple serving cells, including a Primary Cell (PCell) and one or more Secondary Cells (SCells).

In existing communication systems, a Synchronization Signal/Physical Broadcast Channel (PBCH) Block (SSB) is important for SCell management, such as for SCell activation, time/frequency synchronization, and beam management. Conventional SSBs are typically transmitted with a fixed periodicity (e.g., ranging from 5 ms to 160 ms). In addition, the UE is required to report Channel State Information (CSI) according to configurations from the network to assist the base station in scheduling and link adaptation. For Semi-Persistent Scheduling (SPS) CSI reporting, explicit activation and deactivation commands are typically required to control the start and end of the reporting procedure.

However, to reduce operational costs on the network side and minimize environmental impact, Network Energy Savings (NES) has become an important development direction. Recently, concepts related to SSB have been proposed for scenarios with low traffic load or low UE mobility. Under such architecture, coordination of SSB reception and corresponding CSI measurement and reporting mechanisms is a subject to be addressed in the related art.

### SUMMARY

An embodiment of the disclosure provides one or more methods and apparatuses for communication operation.

According to one or more embodiments of the disclosure, a method of communication operation performed by a UE includes: receiving a first signaling for activating a first transmission of a first Synchronization Signal/ Physical Broadcast Channel (PBCH) Block (SSB); and receiving the first transmission of the first SSB according to the first signaling.

According to one or more embodiments of the disclosure, a UE includes a transceiver and a processor. The processor is coupled to the transceiver and configured to perform: receiving a first signaling for activating a first transmission of a first SSB; and receiving the first transmission of the first SSB according to the first signaling.

According to one or more embodiments of the disclosure, a method of communication operation performed by a network device includes: transmitting a first signaling for activating a first transmission of a first SSB; and transmitting the first transmission of the first SSB according to the first signaling.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 is a schematic diagram illustrating SPS CSI report according to an embodiment of the present disclosure.
FIG. 2 is a schematic diagram illustrating on-demand SSB according to an embodiment of the present disclosure.
FIG. 3A is a schematic diagram illustrating the first option of deactivation for on-demand SSB according to an embodiment of the present disclosure.
FIG. 3B is a schematic diagram illustrating the second option of deactivation for on-demand SSB according to an embodiment of the present disclosure.
FIG. 4 is a schematic diagram illustrating a communication system according to an embodiment of the present disclosure.
FIG. 5 is a flowchart illustrating a method of communication operation according to an embodiment of the present disclosure.
FIG. 6 is a schematic diagram illustrating an activation procedure of On-demand SSB according to an embodiment of the present disclosure.
FIG. 7 is a schematic diagram illustrating CSI report of OD-SSB without deactivation command according to an embodiment of the present disclosure.
FIG. 8 is a schematic diagram illustrating an implicit deactivation mechanism for OD-SSB associated with a counter according to an embodiment of the present disclosure.
FIG. 9 is a flowchart illustrating a method of an implicit deactivation mechanism for OD-SSB associated with a counter decrementing mechanism according to an embodiment of the present disclosure.
FIG. 10 is a schematic diagram illustrating a mechanism for CSI report of OD-SSB by using a counter according to an embodiment of the present disclosure.
FIG. 11 is a flowchart illustrating a method of an implicit deactivation mechanisma mechanism for OD-SSB associated with a counter incrementing mechanism according to an embodiment of the present disclosure.
FIG. 12 is a schematic diagram illustrating a mechanism for CSI report of OD-SSB by using a counter according to an embodiment of the present disclosure.
FIG. 13 is a flowchart illustrating a method of a mechanism for CSI report of OD-SSB by using a counter according to an embodiment of the present disclosure.
FIG. 14 is a schematic diagram illustrating an implicit deactivation mechanism for OD-SSB associated with a state according to an embodiment of the present disclosure.
FIG. 15 is a flowchart illustrating a method of an implicit deactivation mechanism for OD-SSB associated with a state according to an embodiment of the present disclosure.
FIG. 16 is a schematic diagram illustrating a mechanism for CSI report of OD-SSB by using a state according to an embodiment of the present disclosure.
FIG. 17 is a flowchart illustrating a method of a mechanism for CSI report of OD-SSB by using a state according to an embodiment of the present disclosure.
FIG. 18 is a schematic diagram illustrating a mechanism for an aperiodic CSI report by using a state according to an embodiment of the present disclosure.
FIG. 19 is a schematic diagram illustrating an explicit deactivation mechanism for OD-SSB with deactivation command according to an embodiment of the present disclosure.
FIG. 20 is a schematic diagram illustrating an explicit deactivation mechanism for OD-SSB associated with a state according to an embodiment of the present disclosure.
FIG. 21 is a flowchart illustrating a method of an explicit deactivation mechanism for OD-SSB associated with a state according to an embodiment of the present disclosure.
FIG. 22 is a schematic diagram illustrating a mechanism for CSI report of OD-SSB by using a state according to an embodiment of the present disclosure.
FIG. 23 is a flowchart illustrating a method of a mechanism for CSI report of OD-SSB by using a state according to an embodiment of the present disclosure.
FIG. 24 is a schematic diagram illustrating a mechanism for CSI report of OD-SSB by using a state according to an embodiment of the present disclosure.
FIG. 25 is a schematic diagram illustrating a mechanism for an aperiodic CSI report of OD-SSB by using a state according to an embodiment of the present disclosure.
FIG. 26 is a flowchart illustrating a method of an explicit deactivation mechanism for OD-SSB using a state according to an embodiment of the present disclosure.
FIG. 27 is a schematic diagram illustrating an explicit deactivation mechanism for OD-SSB associated with a state according to an embodiment of the present disclosure.
FIG. 28 is a flowchart illustrating a method of a mechanism for CSI report of OD-SSB by using a state according to an embodiment of the present disclosure.
FIG. 29 is a schematic diagram illustrating an explicit deactivation mechanism for OD-SSB associated with a state according to an embodiment of the present disclosure.
FIG. 30 is a schematic diagram illustrating an explicit deactivation mechanism for OD-SSB associated with a state according to an embodiment of the present disclosure.
FIG. 31 is a flowchart illustrating a method of an explicit deactivation mechanism for OD-SSB associated with a state according to an embodiment of the present disclosure.
FIG. 32 is a schematic diagram illustrating a mechanism for CSI report of OD-SSB by using a state according to an embodiment of the present disclosure.
FIG. 33 is a flowchart illustrating a method of a mechanism for CSI report of OD-SSB by using a state according to an embodiment of the present disclosure.
FIG. 34 is a schematic diagram illustrating an explicit deactivation mechanism for OD-SSB associated with a state according to an embodiment of the present disclosure.
FIG. 35 is a flowchart illustrating a method of an explicit deactivation mechanism for OD-SSB associated with a state according to an embodiment of the present disclosure.
FIG. 36 is a schematic diagram illustrating a mechanism for CSI report of OD-SSB by using a state according to an embodiment of the present disclosure.
FIG. 37 is a flowchart illustrating a method of a mechanism for CSI report of OD-SSB by using a state according to an embodiment of the present disclosure.
FIG. 38 is a schematic diagram illustrating a mechanism for CSI report of OD-SSB by using a state according to an embodiment of the present disclosure.
FIG. 39 is a schematic diagram illustrating the periodicity relationship between On-demand SSB and Always-on SSB according to an embodiment of the present disclosure.
FIG. 40 is a schematic diagram illustrating CSI report with different priorities according to an embodiment of the present disclosure.
FIG. 41 is a schematic diagram illustrating CSI report with the same priority according to an embodiment of the present disclosure.
FIG. 42 is a schematic diagram illustrating CSI report by using a counter for only one CSI report configuration at the same time according to an embodiment of the present disclosure.
FIG. 43 is a schematic diagram illustrating CSI report by using a state for only one CSI report configuration at the same time according to an embodiment of the present disclosure.
FIG. 44 is a schematic diagram illustrating CSI report by using a counter for more than one CSI report configuration at the same time according to an embodiment of the present disclosure.
FIG. 45 is a schematic diagram illustrating CSI report by using a state for more than one CSI report configuration at the same time according to an embodiment of the present disclosure.
FIG. 46 is a flowchart illustrating a method of communication operation according to an embodiment of the present disclosure.
FIG. 47 is a block diagram illustrating a communication device according to an embodiment of the present disclosure.

### DESCRIPTION OF THE EMBODIMENTS

The abbreviations in the present disclosure are defined as follows and unless otherwise specified, the acronyms have the following meanings:

| Abbreviation | Full name |
|---|---|
| CQI | channel quality indicator |
| CSI | Channel state information |
| CSI-RS | Channel state information reference signal |
| CORESET | Control Resource Set |
| DCI | downlink control information |
| DL | downlink |
| DM-RS | Demodulation RS |
| gNodeB(gNB) | next Generation Node B |
| HARQ-ACK | Hybrid Automatic Repeat request- acknowledgment |
| ID | identity |
| L1 | layer 1 |
| MAC | medium access control |
| MAC CE | MAC control element |
| NW | Network |
| PDCCH | Physical downlink control channel |
| PDSCH | Physical downlink shared channel |
| PMI | Precoder matrix indicator |
| PUCCH | physical uplink control channel |
| PUSCH | physical uplink share channel |
| QCL | quasi co-located |
| RI | rank indictor |
| RRC | radio resource control |
| RS | reference signal |
| RSRP | Reference signal receiving power |
| RSRQ | Reference signal receiving quality |
| SINR | single to interference noise ratio |
| SFN | single frequency network |
| SRS | Sounding reference signal |
| SS | search space |
| SSB | Synchronization signal block |
| SSBRI | SSB resource indicator |
| SBFD | Sub-Band Full Duplex |
| TCI | Transmission configuration indication |
| TDD | Time Division Duplex |
| TRP | transmission reception point |
| Tx beam | transmitted beam |
| UE | user equipment |
| UL | uplink |
| BS | Base Station |
| CORESET | COntrol REsourceSET |
| CSI | Channel State Information |
| DCI | Downlink Control Information |
| DL | DownLink |
| DRX | Discontinuous Reception |
| DTX | Discontinuous Transmission |
| FR1 | Frequency Range 1 |
| FR2 | Frequency Range 2 |
| FDM | Frequency-Division Multiplexing |
| FDD | Frequency -Division Duplexing |
| MAC - CE | Medium Access Control - Control Element |
| NR | New Radio |
| NES | Network Energy Savings |
| OD-SSB | On-Demand SSB |
| PDCCH | Physical Downlink Control Channel |
| PDSCH | Physical Downlink Shared Channel |
| PRACH | Physical Random Access Channel |
| QCL | Quasi Co-Located |
| RACH | Random Access Channel |
| RAR | Random Access Response |
| RO | RACH Occasion |
| RRC | Radio Resource Control |
| RNTI | Radio Network Temporary Identifier |
| RSRP | Reference Signal Received Power |
| SINR | Signal to Interference plus Noise Ratio |
| SSB | Synchronization Signal Block |
| SIB | System Information Block |
| SPS | Semi-Persistent Scheduling |
| TDM | Time-Division Multiplexing |
| TDD | Time-Division Duplexing |
| UE | User Equipment |
| UL | UpLink |
| WID | Work Item Description |
| WUS | Wake Up Signal. |

Some related technologies are introduced first.

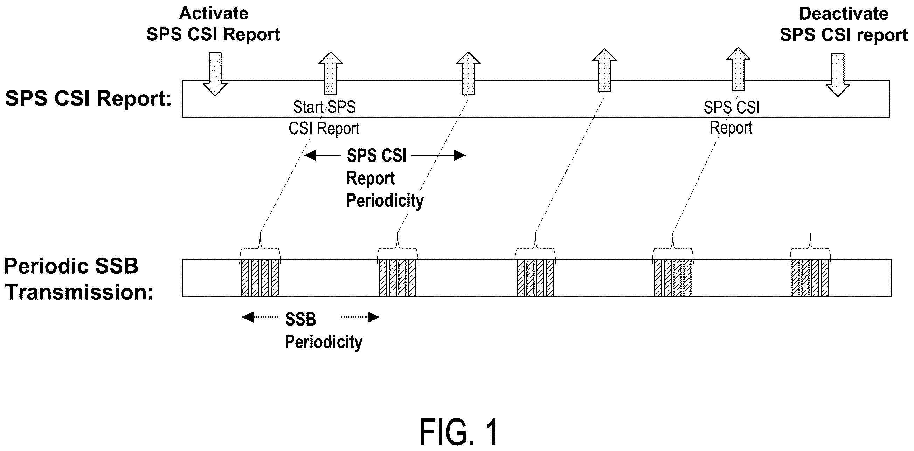

FIG. 1 is a schematic diagram illustrating SPS CSI report according to an embodiment of the present disclosure. Referring to FIG. 1, the SPS CSI report transmission typically involves an activation and a deactivation phase. A User Equipment (UE) starts to perform SPS CSI reporting upon receiving an SPS CSI report activation command. The UE then periodically transmits the CSI report. The UE stops performing the SPS CSI report only upon receiving an explicit SPS CSI report deactivation command.

When the expected traffic load on an SCell is not frequently bursty (low SCell activation rate), and the mobility of the UE is low (low SCell addition/modification rate), SSB-based measurement is not needed often and SSBs can be turned off for the SCell. Then, SSBs can be triggered on again when needed. For Rel-19 NES, RAN1 specifies SSB-less SCell operation for inter-band CA, On-demand SSB SCell operation is proposed. On-demand SSB transmission can be used by UE for at least: SCell time/frequency synchronization, and beam management for SCell activation.

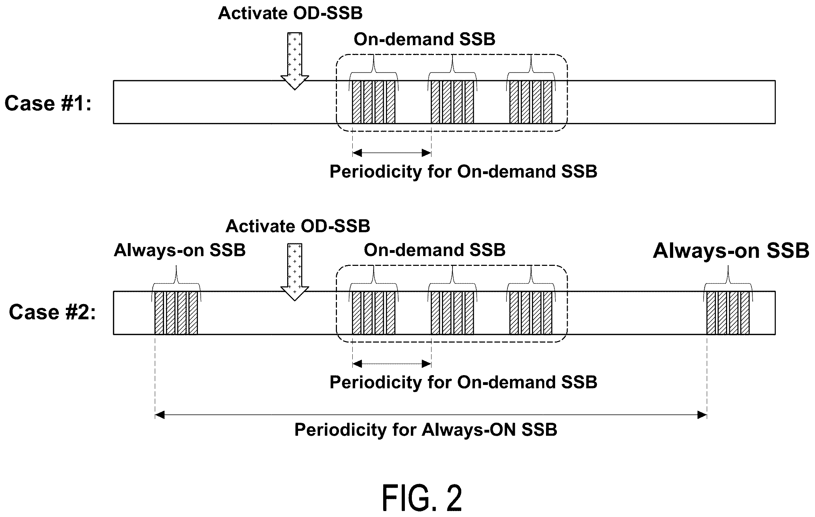

FIG. 2 is a schematic diagram illustrating on-demand SSB according to an embodiment of the present disclosure. Referring to FIG. 2, in contrast to "Always-on SSB" which is transmitted periodically (e.g., with long periodicity) to maintain the radio link, "On-demand SSB (OD-SSB)" is transmitted only when necessary (e.g., for SCell activation) and typically has a shorter periodicity. Case #1 is a scenario where there is no always-on SSB on the cell. The SCell transmits SSB only when triggered (On-demand). Once triggered, the OD-SSB transmission may be periodic for a periodicity. Case #2 is a scenario where always-on SSB is periodically transmitted on the cell. The cell maintains Always-on SSB (e.g., longer periodicity) for basic link maintenance, and activates OD-SSB (e.g., shorter periodicity) when needed for active communication or measurement, e.g., SCell Activation. It should be noticed that when the expected traffic load on an SCell is not frequently bursty, and the mobility of the UE is low, SSB-based measurement is not needed often and SSBs can be turned off for the SCell.

For a cell supporting on-demand SSB SCell operation, RRC based signaling is used to indicate on-demand SSB transmission on the cell at least for the case where this RRC also configures the SCell, activates the SCell, and provides on-demand SSB configuration; and MAC CE based signaling is used to indicate on-demand SSB transmission on the cell.

For a cell supporting on-demand SSB SCell operation, support at least the following options to deactivate on-demand SSB transmission from a UE perspective.

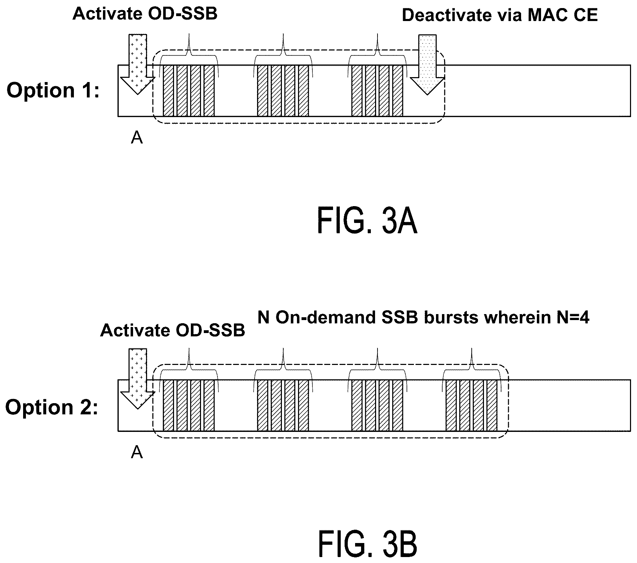

FIG. 3A is a schematic diagram illustrating the first option of deactivation for on-demand SSB according to an embodiment of the present disclosure. Referring to FIG. 3A, the first option of deactivation is an explicit indication mechanism where the network sends a specific command to terminate the SSB transmission. The mechanism gives the network a control over the duration of the SSB burst. The UE continues to monitor the SSB after activation until it receives the explicit deactivation signaling. As shown in FIG. 3A, the process includes:
Indicating: The network transmits an indication (e.g., Activation of OD-SSB) to start the transmission at the time instance A.
Deactivate (e.g., via MAC CE): The network subsequently transmits a MAC-CE to deactivate the OD-SSB. Then, the UE stops the reception upon processing this command.

In one embodiment, a UE 120 may determine a first number of SSB burst, and stop receiving the first transmission of the first SSB until the first number of SSB burst is received.

In one embodiment, a UE 120 may determine the first number of SSB burst indicated or provided by DCI, RRC configuration, or MAC-CE.

FIG. 3B is a schematic diagram illustrating the second option of deactivation for on-demand SSB according to an embodiment of the present disclosure. Referring to FIG. 3B, the second option of deactivation is an implicit termination mechanism based on a configured number of bursts. A finite number (N) of SSB bursts is to be transmitted. Once N bursts are received or the corresponding time duration elapses, the UE stops the reception of SSB burst. As shown in FIG. 3B, the process includes:
Indicating: The network activates the OD-SSB.
N On-demand SSB bursts (e.g., N equals 4): The configuration specifies N bursts (e.g., N=4). The UE monitors exactly 4 bursts and then ceases monitoring.

It should be noted that CSI Report Procedure for OD-SSB can be discussed. For example, the deactivation command for SPS-like CSI reports may not be needed.

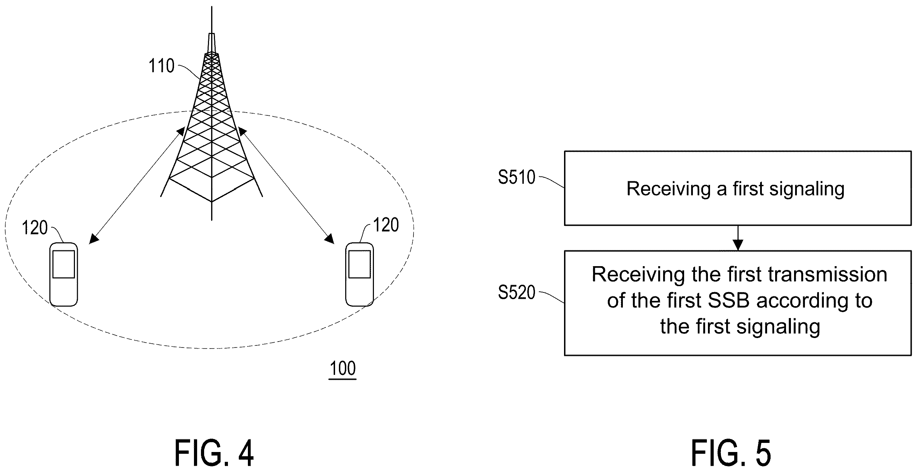

FIG. 4 is a schematic diagram illustrating a communication system 100 according to an embodiment of the present disclosure. Referring to FIG. 4, the communication system 100 (e.g., a Long Term Evolution (LTE) system, an LTE-Advanced (LTE-A) system, an LTE-Advanced Pro system, a 5G NR Radio Access Network (RAN), or a 6G radio access network) typically includes at least one network device 110, at least one user equipment (UE) 120, and one or more optional network elements that provide connection towards a network. The UE 120 communicates with the network (e.g., a Core Network (CN), an Evolved Packet Core (EPC) network, an Evolved Universal Terrestrial Radio Access Network (E-UTRAN), a 5G Core (5GC), or the internet), through a RAN established by one or more network devices 110.

A network device 110 (may be called a base station) may be configured to provide communication services according to at least one of the following Radio Access Technologies (RATs): Worldwide Interoperability for Microwave Access (WiMAX), Global System for Mobile communications (GSM, often referred to as 2G), GSM Enhanced Data rates for GSM Evolution (EDGE) Radio Access Network (GERAN), General Packet Radio Service (GPRS), Universal Mobile Telecommunication System (UMTS, often referred to as 3G) based on basic wideband-code division multiple access (W-CDMA), high-speed packet access (HSPA), LTE, LTE-A, eLTE (evolved LTE, e.g., LTE connected to 5GC), NR (often referred to as 5G), and/or LTE-A Pro. However, the scope of the present disclosure should not be limited to the above-mentioned protocols.

A network device 110 may include but is not limited to, a node B (NB) as in the UMTS, an evolved node B (eNB) as in the LTE or LTE-A, a radio network controller (RNC) as in the UMTS, a base station controller (BSC) as in the GSM/ GSM Enhanced Data rates for GSM Evolution (EDGE) Radio Access Network (GERAN), a next-generation eNB (ng-eNB) as in an Evolved Universal Terrestrial Radio Access (E-UTRA) base station in connection with the 5GC, a next-generation Node B (gNB) as in the 5G Access Network (5G-AN), and any other apparatus capable of controlling radio communication and managing radio resources within a cell. The network device 110 may connect to serve one or more user equipments UE through a radio interface to the network.

The network device 110 (or called base station) may be operable to provide radio coverage to a specific geographical area using a plurality of cells included in the RAN. The network device 110 may support the operations of the cells. Each cell may be operable to provide services to at least one user equipment UE within its radio coverage. Specifically, each cell (often referred to as a serving cell) may provide services to serve one or more UEs 120 within its radio coverage (e.g., each cell schedules the Downlink (DL) and optionally Uplink (UL) resources to at least one UE 120 within its radio coverage for DL and optionally UL packet transmission). The network device 110 may communicate with one or more UEs 120 in the radio communication system through multiple cells. It should be noted that for UL, the UE 120 is a transmitter performing UL transmission, and the network device 110 is a receiver performing UL reception. For DL, the UE 120 is a receiver performing DL reception, and the network device 110 is a transmitter performing DL transmission.

The network device 110 may include a network node NN and one or more TRPs.

It should be noted that, in the present disclosure, the UE 120 may be, but is not limited to, a mobile station, a mobile terminal or device, or a user communication radio terminal. For example, the user equipment UE may be a portable radio equipment, which includes, but is not limited to, a mobile phone, a tablet, a wearable device, a sensor, a vehicle, or a Personal Digital Assistant (PDA) with wireless communication capability. The UE 120 is configured to receive and transmit signals over an air interface to one or more cells in a radio access network.

It should be understood that the terms "system" and "network" used in the disclosure are often used interchangeably. The term "and/or" in the disclosure is only an association relationship describing the associated objects, which means that there can be three kinds of relationships, for example, A and/or B, which can mean three situations: A is present alone, A and B are present simultaneously, or B is present alone. In addition, the character "/" in the disclosure generally indicates that the associated objects are in an "or" relationship.

To facilitate understanding of the technical solutions of the embodiments of the disclosure, the technical concepts related to the embodiments of the disclosure are described below.

FIG. 5 is a flowchart illustrating a method of communication operation according to an embodiment of the present disclosure. The method may be performed by a UE 120. Referring to FIG. 5, in step S510, the UE 120 receives a first signaling for activating a first transmission of a first Synchronization Signal/Physical Broadcast Channel (PBCH) Block (SSB). Specifically, the first signal is a control signaling/message used to trigger the SSB transmission, e.g., On-demand SSB burst. In one embodiment, the first signaling may be an activation command for the first SSB, e.g., On-demand SSB (OD-SSB). The first signaling may trigger the transmission of SSB bursts on an SCell. In one embodiment, the first signaling is indicated or provided by Downlink Control Information (DCI), Radio Resource Control (RRC) configuration, or Media Access Control-Control Element (MAC-CE). For example, UE 120 receives a MAC-CE indicating activation of OD-SSB.

In step S520, the UE 120 receives the first transmission of the first SSB according to the first signaling. Specifically, upon receiving the first signaling, the UE 120 determines the radio resources for the first SSB and begins reception. This may allow the UE 120 to perform synchronization or measurement on the On-demand SSB. In one embodiment, the first SSB may the On-demand SSB burst. Upon receiving the command, UE 120 starts monitoring the configured resources.

In one embodiment, for CSI report of OD-SSB, it can be configured as 'periodic', 'SPS', 'SPS-like', or 'aperiodic'. In one embodiment, if the CSI report of OD-SSB is configured as 'periodic', the corresponding CSI report of OD-SSB may be reported on a first uplink channel (e.g., PUCCH). In one embodiment, if the CSI report of OD-SSB is configured as 'SPS' or 'SPS-like', the corresponding CSI report of OD-SSB can be reported on a second uplink channel (e.g., PUCCH or PUSCH). In one embodiment, if the CSI report of OD-SSB is configured as 'aperiodic', the corresponding CSI report of OD-SSB can be reported on a third uplink channel (e.g., PUSCH).

In one embodiment, the activation command of CSI report of OD-SSB may be: the same as the activation command of OD-SSB, or an additional command after the activation command of OD-SSB is transmitted.

In one embodiment, if the activation command of OD-SSB is transmitted via MAC-CE, the activation command of CSI report can be transmitted after a ΔT delay when the corresponding ACK of activation command of OD-SSB is transmitted.

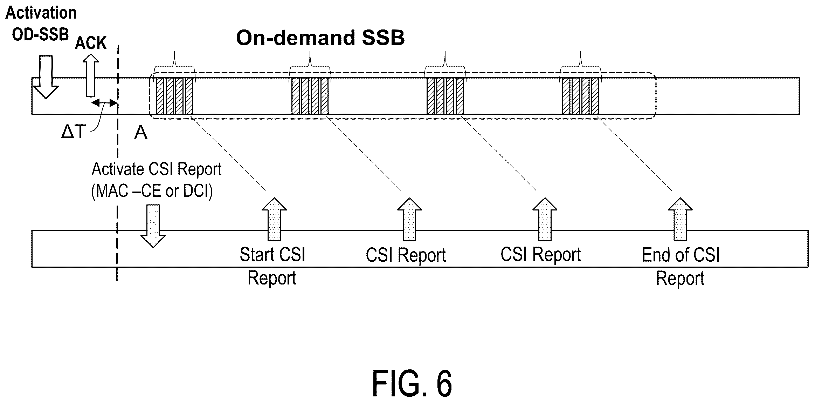

For example, FIG. 6 is a schematic diagram illustrating an activation procedure of On-demand SSB according to an embodiment of the present disclosure. Referring to FIG. 6, the process begins with the activation of the OD-SSB. A time instance A is defined as the beginning of the first slot containing the first actually transmitted SSB index within the first "possible" On-demand SSB burst. The activation command of CSI report (e.g., via MAC-CE or DCI) occurs at least ΔT delay after the time where the UE 120 transmits a signaling (e.g., ACK) to the network device 110 (e.g., gNB) to response the activation of On-demand SSB transmission.

In one embodiment, an activation command of OD-SSB may be an activation command of CSI report. For example, an activation procedure of On-demand SSB begins with the activation command of the OD-SSB. This activation command of OD-SSB further indicates the activation command of CSI report. After the UE 120 transmits a signaling (e.g., ACK) to the network device 110 (e.g., gNB), the UE 120 starts reporting CSI corresponding to the received On-demand SSB burst. That is, there would be only one activation command for both OD-SSB and CSI report.

In one embodiment, a UE 120 may receive a second signaling for deactivating the first transmission of the first SSB, and stop receiving the first transmission of the first SSB according to the second signaling.

In one embodiment, the second signaling is indicated or provided by DCI, RRC configuration, or MAC-CE.

In one embodiment, the deactivation command of CSI report of OD-SSB may not be needed, because support at least the following options to deactivate on-demand SSB transmission from a UE perspective.
Option 1: Explicit indication of deactivation for on-demand SSB via MAC-CE for on-demand SSB transmission indication;
Option 2: Configuration/indication of the number N of on-demand SSB bursts to be transmitted after on-demand SSB is indicated.

Taking FIG. 6 as an example, a configuration indicates 4 on-demand SSB bursts. After 4 CSI reports are transmitted, the CSI report is deactivated.

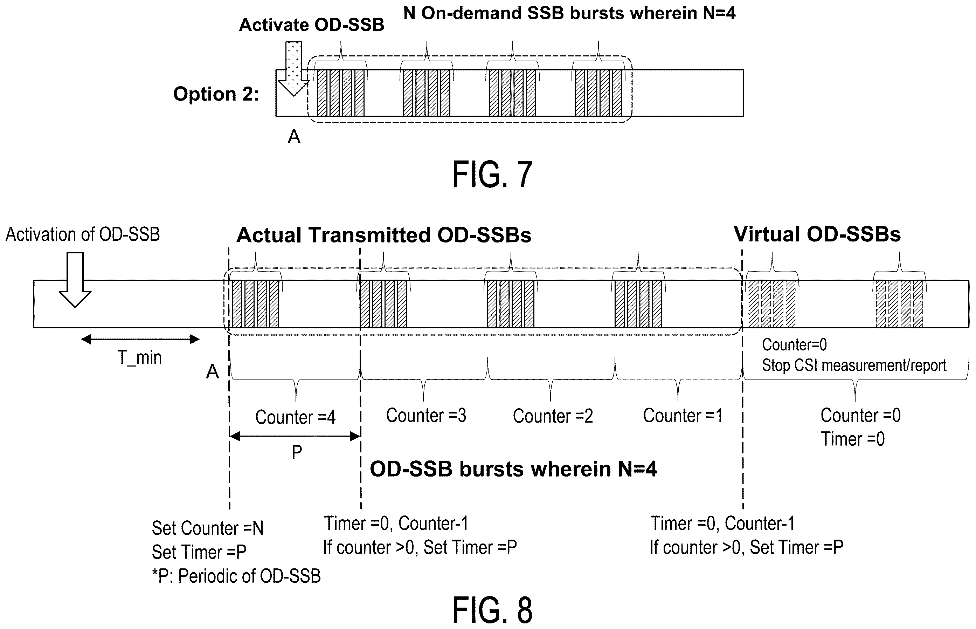

FIG. 7 is a schematic diagram illustrating CSI report of OD-SSB without deactivation command according to an embodiment of the present disclosure. Referring to FIG. 7, the method involves implicit deactivation for the CSI report. This scenario corresponds to the "SPS-like" CSI report where no explicit deactivation command is needed. As shown in the figure, "Option 2: N OD-SSB bursts where N=4" implies that the number of the OD-SSB transmission is preconfigured. UE 120 receives the activation at time instance A, counts the OD-SSB bursts, and stops reception/reporting after N OD-SSB bursts.

In one embodiment, a UE 120 may set a counter of the first SSB for counting a number of SSB burst,
in response to the counter of the first SSB being expired, stop receiving the first transmission of the first SSB; and
in response to the counter of the first SSB being not expired, receiving the first transmission of the first SSB.

In one embodiment, for configuration/indication of the number N of OD-SSB bursts to be transmitted after OD-SSB is activated, the OD-SSB may be associated with a counter. If the counter is not expired (Counter>0), OD-SSB is transmitted. If the counter is expired (Counter<=0), the transmission of OD-SSB is stopped.

For example, FIG. 8 is a schematic diagram illustrating an implicit deactivation mechanism for OD-SSB associated with a counter according to an embodiment of the present disclosure. Referring to FIG. 8, the counter is defined as a variable for counting the number of SSB bursts. At the activation of OD-SSB (or at time instance A), the counter is set to N (e.g., N=4). Time instance A is the beginning of the first slot containing the first actually transmitted SSB index within the first "possible" OD-SSB burst which is at least T slots after the slot where UE 120 receives a signalling from the network device 110 (e.g., gNB) to indicate OD-SSB transmission, where T is not less than Tₘᵢₙ (e.g., Tₘᵢₙ= (*m*+3)*_{N_slot}* ^{(*subframe, µ*)}+1 , and *m* and *µ* are parameters related to numerology and processing capabilities). The counter is decremented with each periodicity P (or each SSB burst). At Counter=4, 3, 2, 1: These correspond to actual transmitted OD-SSBs (Counter > 0). At Counter=0: The counter expires. This corresponds to virtual OD-SSBs (Counter <= 0) where no actual OD-SSBs transmission occurs.

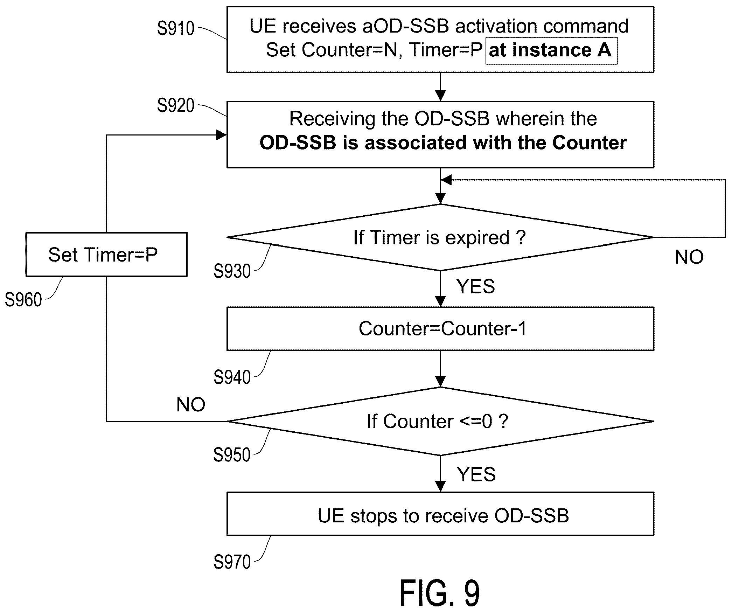

FIG. 9 is a flowchart illustrating a method of an implicit deactivation mechanism for OD-SSBassociated with a counter decrementing mechanism according to an embodiment of the present disclosure. Referring to FIG. 9, in step S910, a UE 120 receives a OD-SSB activation command. The UE 120 sets Counter=N, Timer=P at time instance A. In step S920, the UE 120 receives the OD-SSB, where the OD-SSB is associated with the Counter. In step S930, the UE 120 checks if the the Timer is expired. The condition "expired" is defined as the counter reaching a threshold, such as zero (or less than or equal to zero) in a decrementing mechanism. If the Timer is not expired, the UE 120 continues receiving the OD-SSB. However, in step S940, if the Timer is expired, the counter is decremented (e.g., Counter=Counter-1). In step S950, the UE 120 checks if the Counter less than or equal to 0. If the Counter is greater than 0, in step S960, the UE 120 sets the Timer to the periodicity P and continues to receive the OD-SSB. If the Counter is less than or equal to 0, in step S970, the UE 120 stops receiving OD-SSB.

In one embodiment, a UE 120 may set a counter of the first SSB for counting a number of SSB burst,
in response to the counter of the first SSB being expired, stop receiving the first transmission of the first SSB; and
in response to in response to the counter of the first SSB being not expired, receiving the first transmission of the first SSB.

In one embodiment, for configuration/indication of the number N of OD-SSB bursts to be transmitted after OD-SSB is activated, the CSI report may:
CSI report may be transmitted if the counter of a corresponding OD-SSB is not expired (e.g., counter>0);
CSI report may be stopped/deactivated if the counter of a corresponding OD-SSB is expired (e.g., counter<=0).

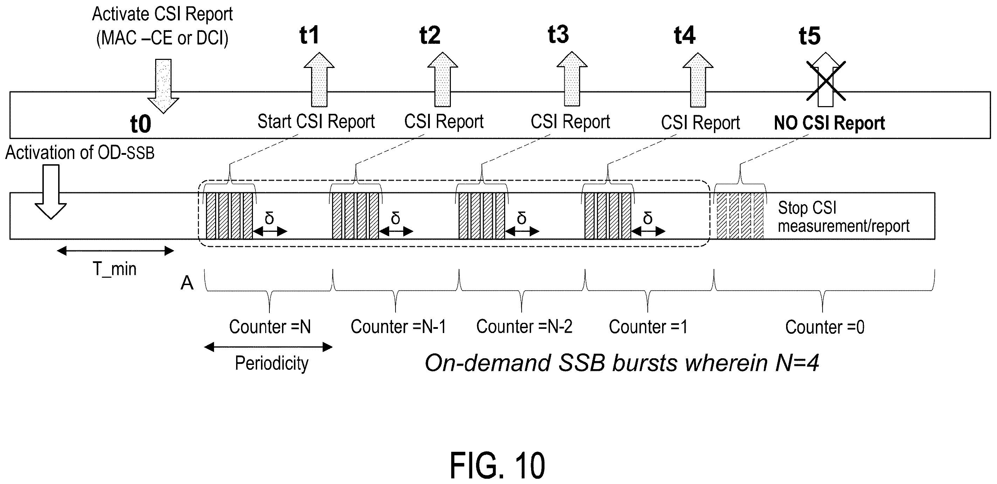

For example, FIG. 10 is a schematic diagram illustrating amechanism for CSI report of OD-SSB by using a counter according to an embodiment of the present disclosure. Referring to FIG. 10, activation: At time instance A, the counter is initialized (Set Counter = N = 4). Active Phase: During the intervals where Counter = N, N-1, N-2, and 1 (N=4 for example), the OD-SSB bursts are transmitted as actual transmission. At time t1~t4, the UE 120 performs CSI report because the counter of a corresponding OD-SSB is not expired (counter>0), respectively. Expiry: After the 4th SSB burst, the counter becomes 0. The subsequent SSB bursts are "Virtual OD-SSB" (not transmitted). The UE 120, aware of the counter state, ceases CSI report at time t5 because the counter of a corresponding OD-SSB is expired (counter<=0).

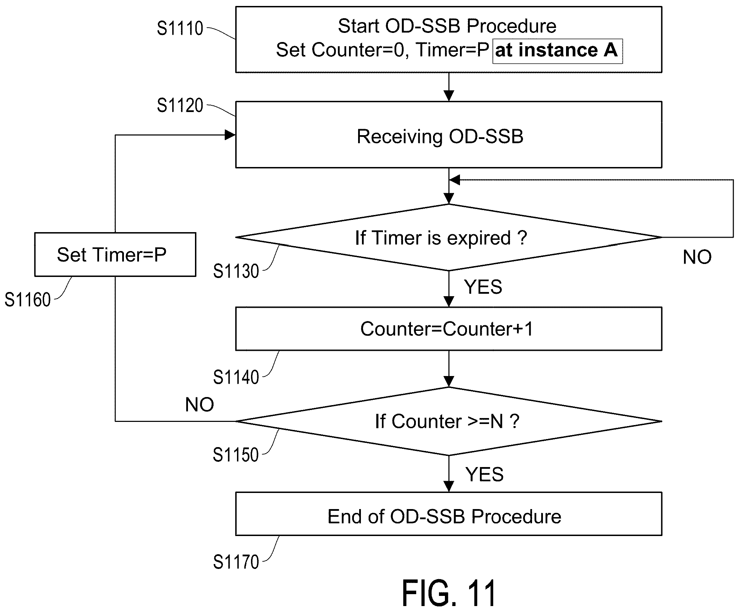

Alternatively, the counter can be implemented as an incrementing variable. FIG. 11 is a flowchart illustrating an implicit deactivation mechanism for OD-SSB associated with a counter incrementing mechanism according to an embodiment of the present disclosure. Referring to FIG. 11, in step S1110, the UE 120 start OD-SSB procedure, and sets a Counter (e.g., initializes to 0 or 1) and a Timer (e.g., initializes to the periodicity P) at time instance A. In step S1120, the UE 120 checks if the Timer is expired. If the Timer is not expired (e.g., counter<N), the UE 120 receives the OD-SSB (step S1130). In step S1140, the counter is then incremented (e.g., Counter=Counter+1) and the Timer is reset. In step S1150, the UE 120 checks if the Counter is larger than or equals N. If not, in step S1160, the UE 120 sets the Timer to the periodicity P. If the Counter reaching the limit (larger than or equals N), the UE 120 stops receiving the SSB (step S1170) as the end of the OD-SSB procedure.

In one embodiment, the CSI report may:
CSI report may be transmitted if the counter of a corresponding OD-SSB is not expired (e.g., counter<N);
CSI report may be stopped/deactivated/dropped (or not updated) if the counter of a corresponding OD-SSB is expired (e.g., counter>=N).

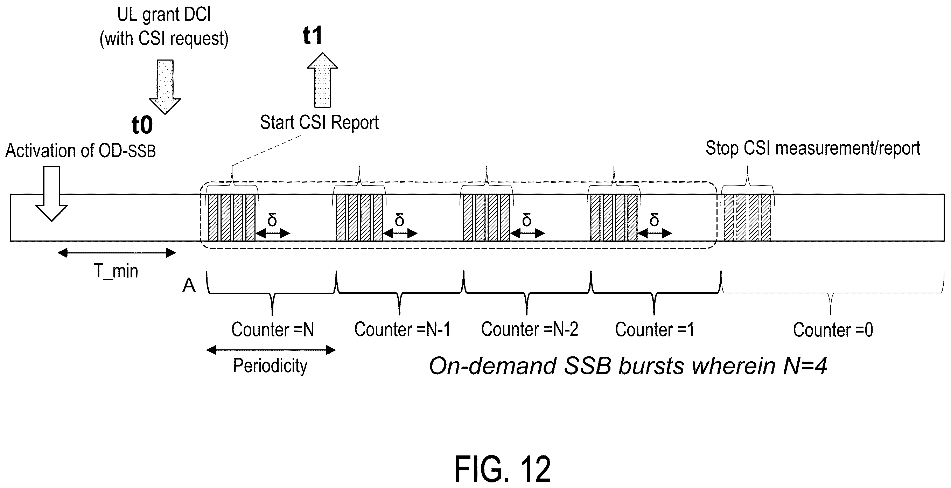

For example, FIG. 12 is a schematic diagram illustrating a mechanism for CSI report of OD-SSB by using a counter according to an embodiment of the present disclosure. Referring to FIG. 12, at time t0, CSI report is activated. At time t1, the CSI report is transmitted (Counter is not expired or Counter>0). Then, CSI report is stopped/deactivated (No corresponding measurement resource or Counter<=0). δ is the minimum processing time of CSI measurement.

In one embodiment, a UE 120 may receive a first channel state information (CSI) report configuration, receive a third signaling for activating a first CSI report corresponding to the first SSB and configured by the first CSI report configuration, and transmit a first CSI report according to the third signaling.

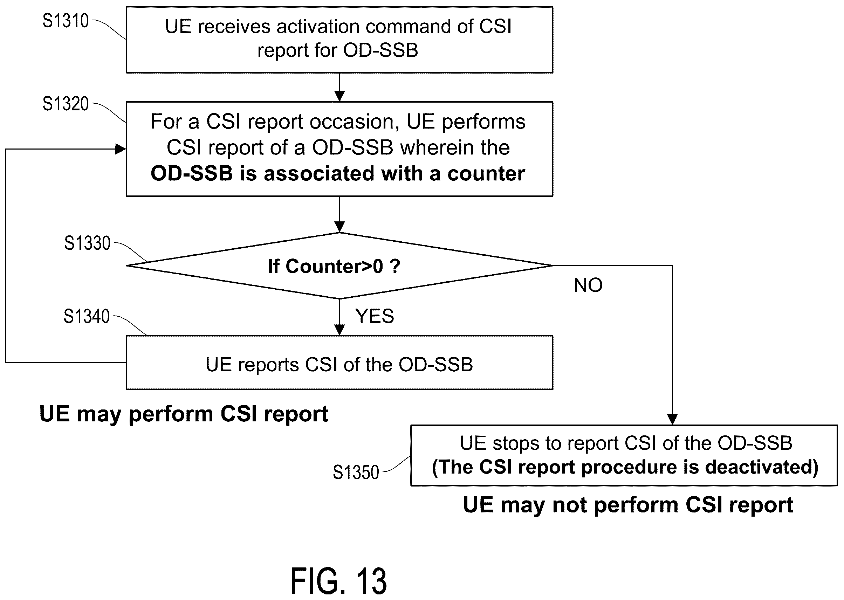

FIG. 13 is a flowchart illustrating a method of a mechanism for CSI report of OD-SSB by using a counter according to an embodiment of the present disclosure. Referring to FIG. 13, the transmission of the CSI report is conditionally dependent on the counter. In step S1310, the UE 120 receives activation command of CSI report of OD-SSB, and the counter is set. In step S1320, for a CSI report occasion, the UE 120 performs CSI report of a OD-SSB, where the OD-SSB is associated with a counter. In step S1330, the UE 120 checks if the counter is larger than 0. If yes, in step S1340, the UE 120 may perform CSI report, for example, reporting CSI of the OD-SSB. If not, in step S1350, the UE 120 may not perform CSI report, for example, stopping to report CSI of the OD-SSB.

In one embodiment, for configuration/indication of the number N of OD-SSB bursts to be transmitted after OD-SSB is activated, the OD-SSB may be associated with a state. For a first state (e.g., State 0), OD-SSB is not transmitted. For a second state (e.g., State 1), OD-SSB is transmitted.

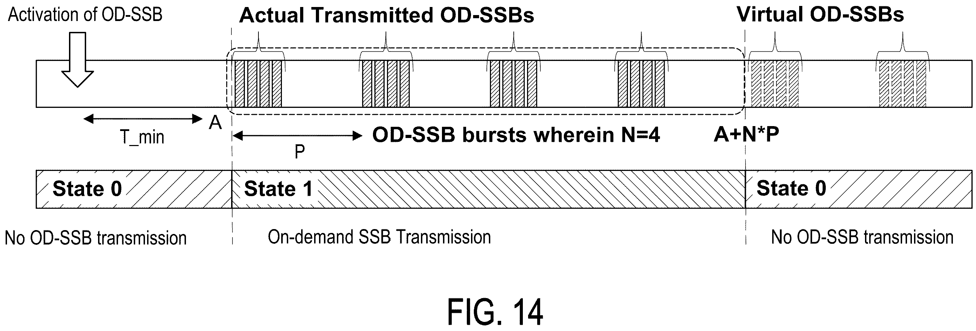

For example, FIG. 14 is a schematic diagram illustrating an implicit deactivation mechanism for OD-SSB associated with a state according to an embodiment of the present disclosure. Referring to FIG. 14, the OD-SSB is associated with a state, such as a first state (e.g., State 0) and a second state (e.g., State 1). The first state indicates that the OD-SSB is not transmitted (or is a virtual transmission), while the second state indicates that the OD-SSB is actually transmitted. The UE 120 sets the state to the second state (State 1) at a time instance A, which corresponds to the start of the first actually transmitted SSB burst. The duration of the active state (State 1) is calculated as N*P, where N is the number of SSB bursts and P is the periodicity of the SSB bursts. Consequently, at the time instance A + N*P, the UE 120 transitions the state back to the first state (State 0). The time interval between time instance A and time instance A + N*P is designated as State 1, during which the UE 120 expects valid SSB transmissions and may perform corresponding CSI reporting. Outside this time interval, the state is State 0, and the UE 120 may not make valid SSB transmissions.

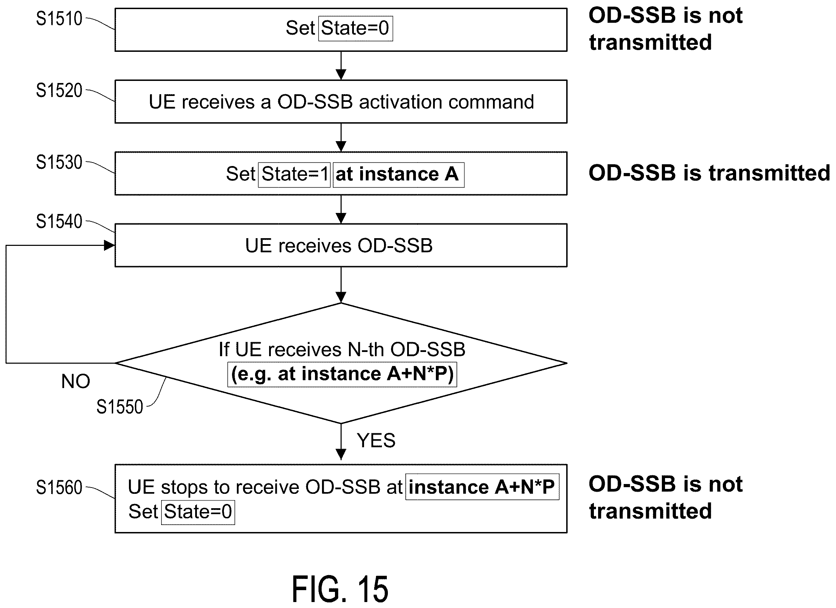

FIG. 15 is a flowchart illustrating a method of an implicit deactivation mechanism for OD-SSB associated with a state according to an embodiment of the present disclosure. Referring to FIG. 15, at first, in step S1510, the state is set as "State 0", and OD-SSB is not transmitted. In step S1520, the UE 120 receives a OD-SSB activation command. Based on the activation command and configured parameters (e.g., N bursts and periodicity P of OD-SSB bursts), the UE 120 sets the state to "State 1" at time instance A (step S1530). The UE 120 also schedules the state transition to "State 0" at time instance A + N*P. In step S1540, the UE 120 monitors the OD-SSB based on the current state. If the current time is within the interval [A, A + N*P), the state is State 1, and the UE 120 receives the OD-SSB. The UE 120 checks if it has received the N-th OD-SSB (e.g., at instance A + N*P) (step S1550). After the UE 120 receives N-th OD-SSB (e.g., at the time it reaches A + N*P), the state transitions to State 0, OD-SSB is not transmitted, and the UE 120 stops receiving the OD-SSB (step S1560).

In one embodiment, for configuration/indication of the number N of OD-SSB bursts to be transmitted after OD-SSB is activated, the CSI report may:
CSI report may not be transmitted if the state for a corresponding OD-SSB is a first state (e.g., State 0);
CSI report may be transmitted if the state for a corresponding OD-SSB is a second state (e.g., State 1).

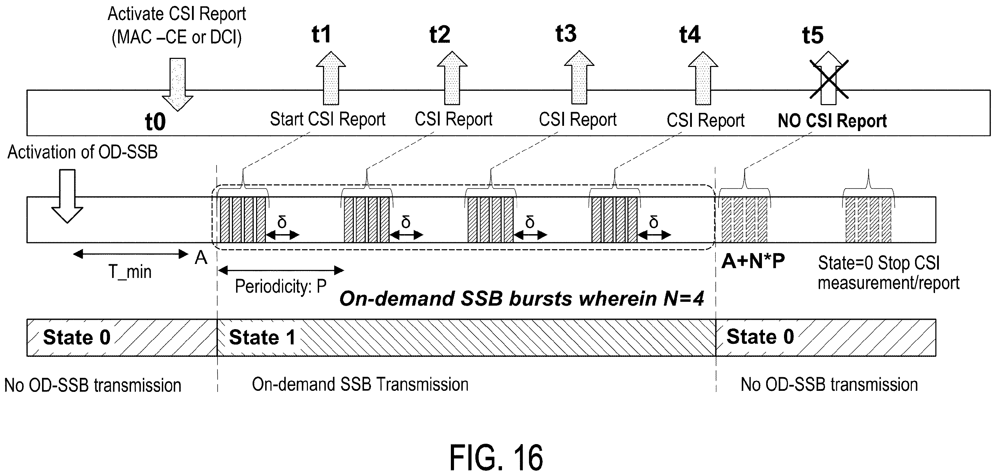

For example, FIG. 16 is a schematic diagram illustrating a mechanism for CSI report of OD-SSB by using a state according to an embodiment of the present disclosure. Referring to FIG. 16, the timeline shows multiple CSI report occasions (time t0 to t5). The minimum processing time δ of CSI measurement is also indicated. At time t0, CSI report is activated. From time t1 to t4, the corresponding SSB bursts are valid (e.g., State 1 and corresponding to actual transmitted SSB), so the CSI reports are transmitted. However, at time t5, the corresponding SSB burst would have another state (e.g., State 0 and corresponding to virtual transmitted SSB), so the CSI report is stopped or deactivated.

In one embodiment, a UE 120 may set a state of the first SSB for counting a number of SSB burst,
stop transmitting a first CSI report corresponding to the first SSB, in response to the state of the first SSB being a first state; and
transmitting the first CSI report corresponding to the first SSB, in response to the state of the first SSB being a second state.

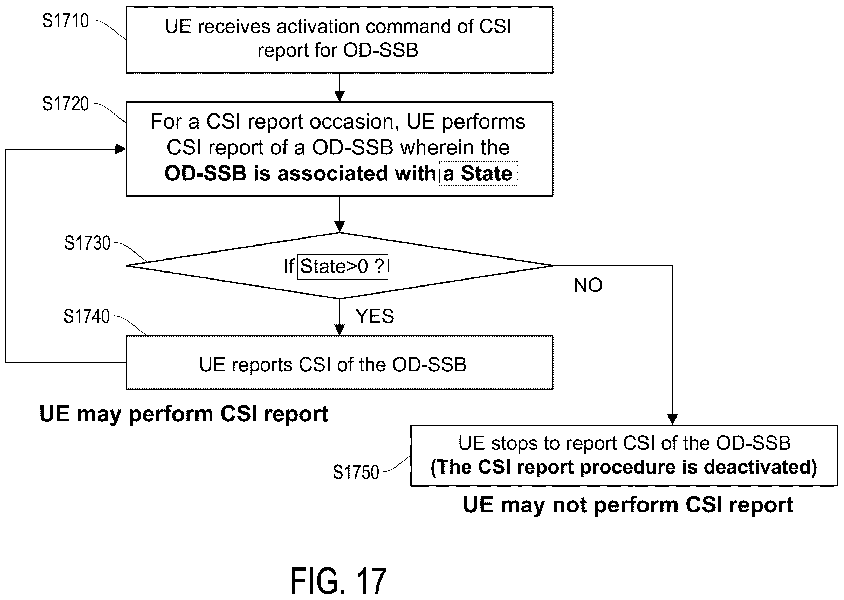

FIG. 17 is a flowchart illustrating a method of a mechanism for CSI report of OD-SSB by using a state according to an embodiment of the present disclosure. Referring to FIG. 17, in step S1710, the UE 120 receives an activation command of CSI report of OD-SSB. In step S1720, for a CSI report occasion, the UE 120 performs CSI report of an OD-SSB associated with a State. In step S1730, the UE 120 checks if the State is a second state (e.g., State 1). If yes, in step S1740, the UE 120 reports the CSI of the OD-SSB. That is, the UE 120 may perform the CSI report. If no, in step S1750, the UE 120 stops reporting the CSI (i.e., the CSI report procedure is deactivated). That is, the UE 120 may not perform the CSI report.

In one embodiment, the CSI report may:
CSI report may not be transmitted or not updated, if the state for a corresponding OD-SSB is a first state (e.g., State 0);
CSI report may be transmitted if the state for a corresponding OD-SSB is a second state (e.g., State 1).

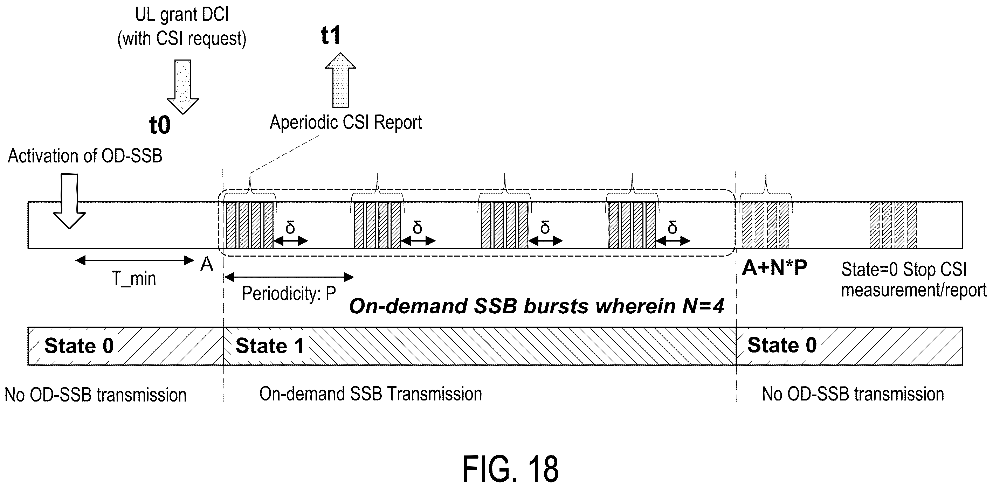

For example, FIG. 18 is a schematic diagram illustrating a mechanism for an aperiodic CSI report by using a state according to an embodiment of the present disclosure. Referring to FIG. 18, an aperiodic CSI report may be transmitted if the state for an OD-SSB is the second state (State 1). Conversely, the Aperiodic CSI report may not be transmitted or not updated if the state is the first state (State 0). As shown, at time t0, the report is activated (e.g., via UL grant DCI). At time t1, since the corresponding SSB burst falls within the State 1 interval, the Aperiodic CSI report is transmitted. After A + N*P, the state becomes State 0, and no aperiodic report is sent.

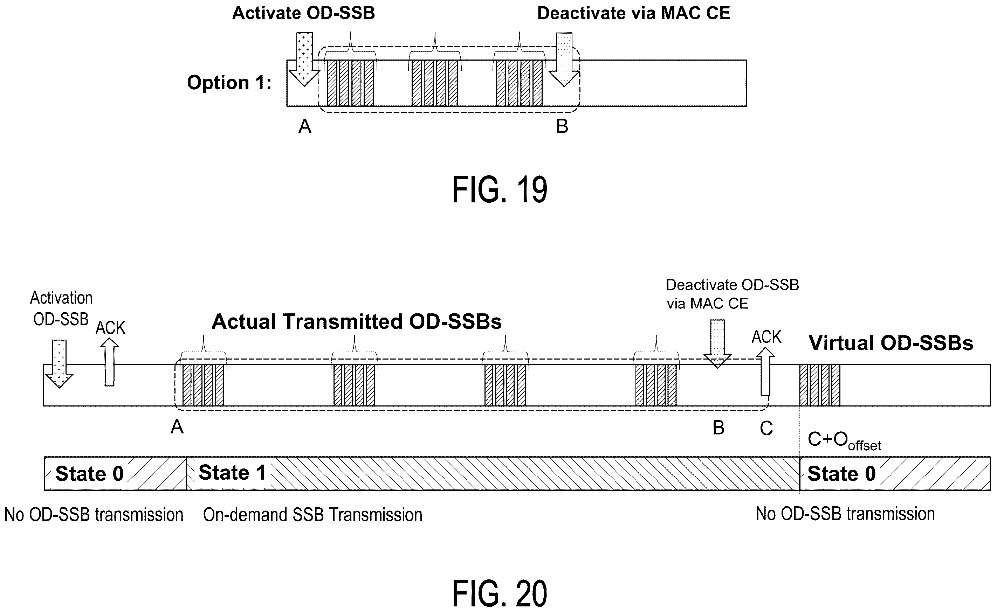

FIG. 19 is a schematic diagram illustrating an explicit deactivation mechanism for OD-SSB with deactivation command (e.g., MAC-CE) according to an embodiment of the present disclosure. Referring to FIG. 19, there is an explicit indication of deactivation for OD-SSB via MAC-CE for OD-SSB transmission indication. The OD-SSB is activated at time instance A. Then, the OD-SSB is deactivated (e.g., via MAC CE) at time instance B.

In one embodiment, the explicit indication of deactivation for OD-SSB via MAC-CE is used. The OD-SSB may be associated with a state. For a first state (e.g., State 0), OD-SSB is not transmitted. For a second state (e.g., State 1), OD-SSB is transmitted.

For example, FIG. 20 is a schematic diagram illustrating an explicit deactivation mechanism for OD-SSB associated with a state according to an embodiment of the present disclosure. Referring to FIG. 20, at time instance A, the first actually transmitted SSB burst starts. At time instance B: UE 120 receives the deactivation command of OD-SSB (e.g., via MAC CE). At time instance C, UE 120 feedbacks ACK corresponding to the deactivation command. O_{offset} is a fixed, preconfigured, or configurable value, for example, O_{offset} is larger than or equal to 0. The interval [A, C + O_{offset}) is defined as State 1 and corresponds to OD-SSB transmission. After C + O_{offset}, the state transitions to State 0 and corresponds to no OD-SSB transmission.

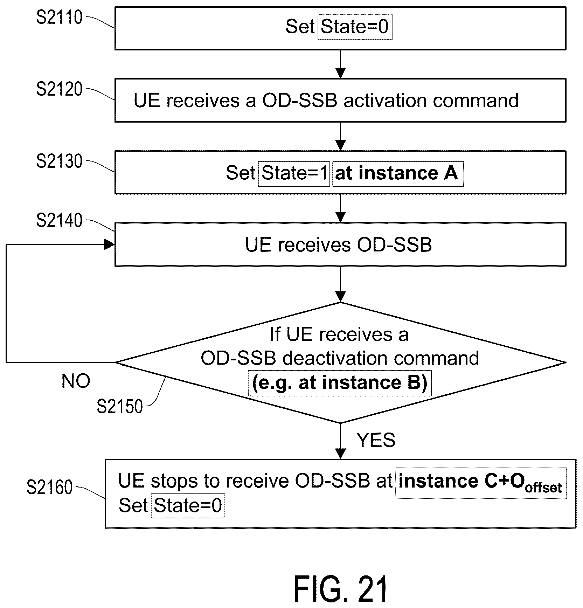

FIG. 21 is a flowchart illustrating a method of an explicit deactivation mechanism forOD-SSB associated with a state according to an embodiment of the present disclosure. Referring to FIG. 21, in step S2110, the State is set as 0. In step S2120, the UE 120 receives an OD-SSB activation command. In step S2130, the UE 120 sets State = 1 at time instance A. In step S2140, the UE 120 receives the OD-SSB. In step S2150, the UE 120 checks if it has received an OD-SSB deactivation command (e.g., at time instance B). If not, it continues receiving. If yes, in step S2160, the UE 120 sets State = 0 at instance C + O_{offset}, and then stops receiving OD-SSB.

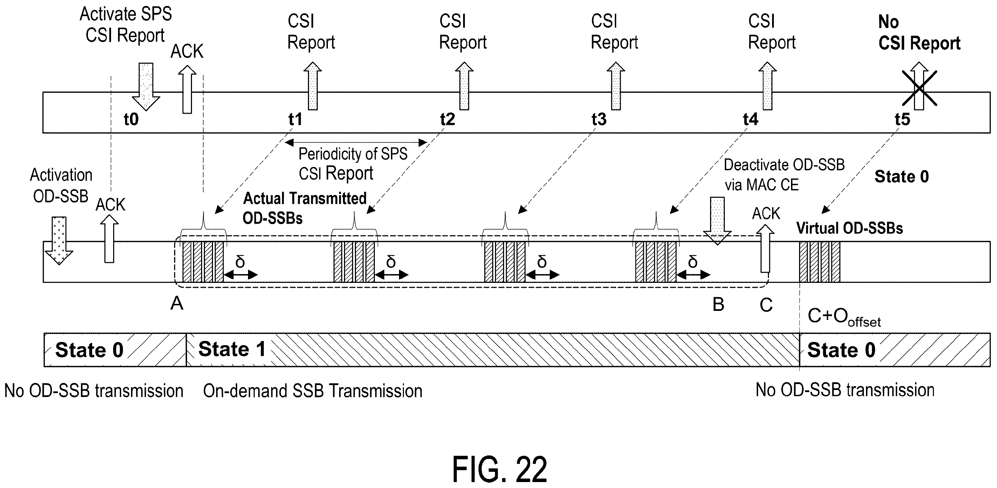

FIG. 22 is a schematic diagram illustrating a mechanism for CSI report of OD-SSB by using a state according to an embodiment of the present disclosure. Referring to FIG. 22, at time t0, CSI report is activated. From time t1 to t4, the corresponding SSB bursts are valid (State 1 and corresponding to actual transmitted SSB), so the CSI reports are transmitted. However, at time t5, the corresponding SSB burst would have another state (State 0 and corresponding to virtual transmitted SSB), so the CSI report is stopped or deactivated.

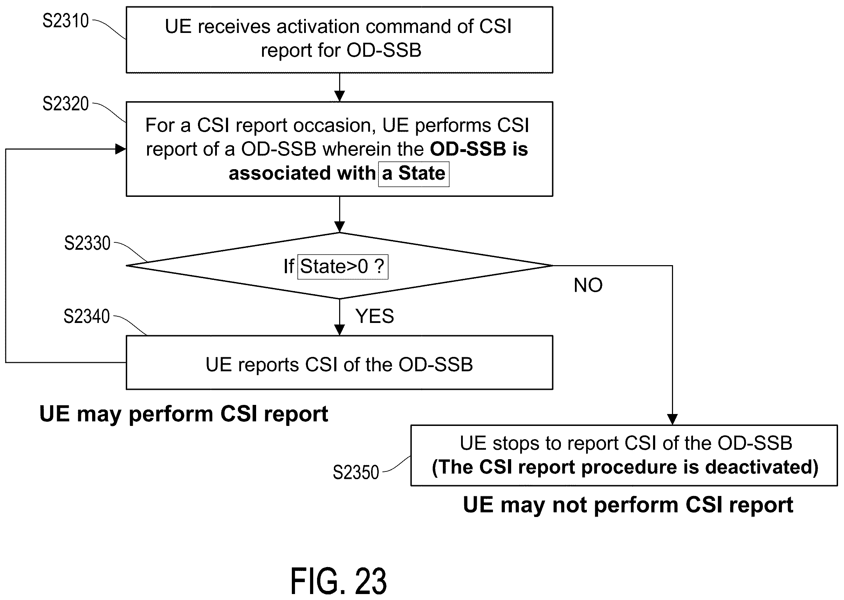

FIG. 23 is a flowchart illustrating a method of a mechanism for CSI report of OD-SSB by using a state according to an embodiment of the present disclosure. Referring to FIG. 23, in step S2310, the UE 120 receives an activation command of CSI report of OD-SSB. In step S2320, for a CSI report occasion, the UE 120 performs CSI report of a OD-SSB associated with a State. In step S2330, the UE 120 checks if the State is greater than 0 (i.e., State 1). If yes, the UE 120 reports the CSI of the OD-SSB (step S2340). That is, the UE 120 may perform the CSI report. If no, the UE 120 stops reporting CSI (step S2350) (i.e., the CSI report procedure is deactivated). That is, the UE 120 may not perform the CSI report.

In one embodiment, the CSI report may:
CSI report may not be transmitted or not updated, if the state for a OD-SSB is a first state (State 0);
CSI report may be transmitted if the state for a OD-SSB is a second state (State 1).

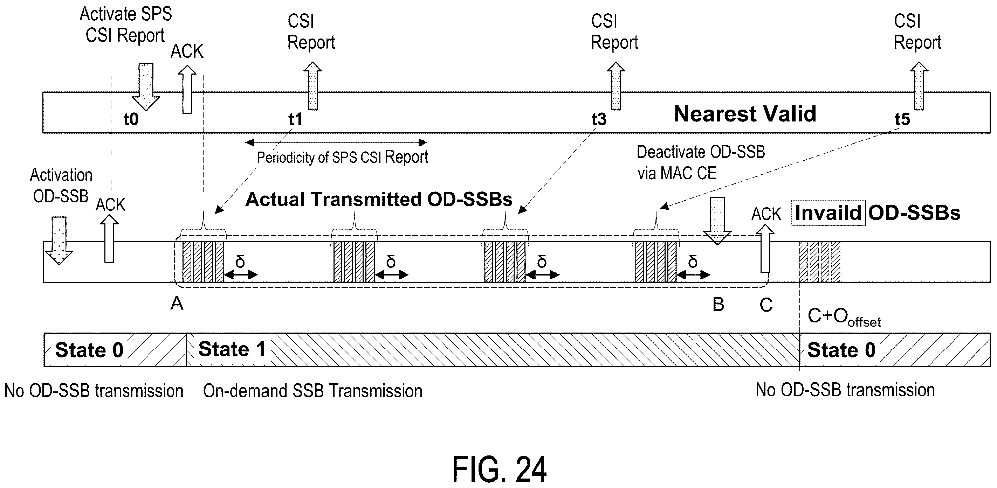

For example, FIG. 24 is a schematic diagram illustrating a mechanism for CSI report of OD-SSB by using a state according to an embodiment of the present disclosure. Referring to FIG. 24, initially, from time t1 to t4, the CSI reports are transmitted as they correspond to "Actual Transmitted OD-SSBs" (State 1). At time t5, the report occasion corresponds to "Invalid OD-SSBs" (State 0). In one embodiment, instead of simply dropping the report, the UE 120 may report the CSI of the "Nearest Valid" SSB resource after the reception of the deactivation command of OD-SSB.

In one embodiment, the CSI report may:
CSI report may not be transmitted or not updated, if the state for a corresponding OD-SSB is a first state (State 0);
CSI report may be transmitted if the state for a corresponding OD-SSB is a second state (State 1).

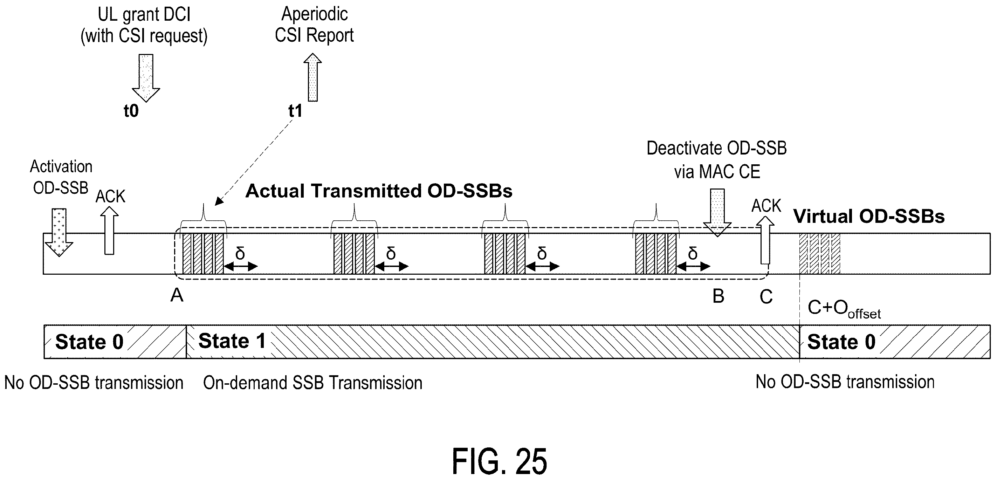

For example, FIG. 25 is a schematic diagram illustrating a mechanism for an aperiodic CSI report of OD-SSB by using a state according to an embodiment of the present disclosure. Referring to FIG. 25, at time t0, the Aperiodic CSI report is activated (e.g., via UL grant DCI). Since the time t1 falls within the State 1 interval [A, C + O_{offset}), the Aperiodic report is transmitted. However, if an Aperiodic report was triggered after C + O_{offset} (State 0), it would not be transmitted.

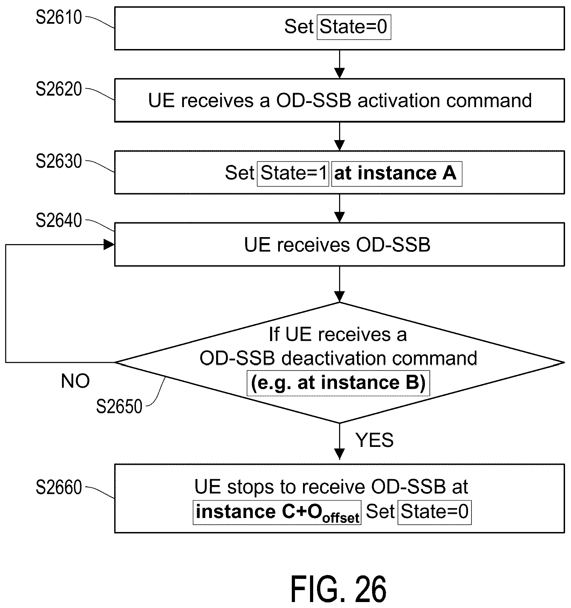

FIG. 26 is a flowchart illustrating a method of an explicit deactivation mechanism for OD-SSB using a state according to an embodiment of the present disclosure. Referring to FIG. 26, in step S2610, the State is set as 0. In step S2620, the UE 120 receives an OD-SSB activation command. In step S2630, the UE 120 sets State = 1 at time instance A. In step S2640, the UE 120 receives the OD-SSB. In step S2650, the UE 120 checks if it has received an OD-SSB deactivation command (e.g., at time instance B). If not, it continues receiving. If yes, in step S2660, the UE 120 stops receiving OD-SSB at time instance C withadding O_{offset} (e.g., O_{offset} >=0) and sets State = 0.

In one embodiment, for explicit indication of deactivation for OD-SSB via MAC-CE transmission indication, the OD-SSB may be associated with a state. For a first state (e.g., State 0), OD-SSB is not transmitted. For a second state (e.g., State 1), OD-SSB is transmitted.

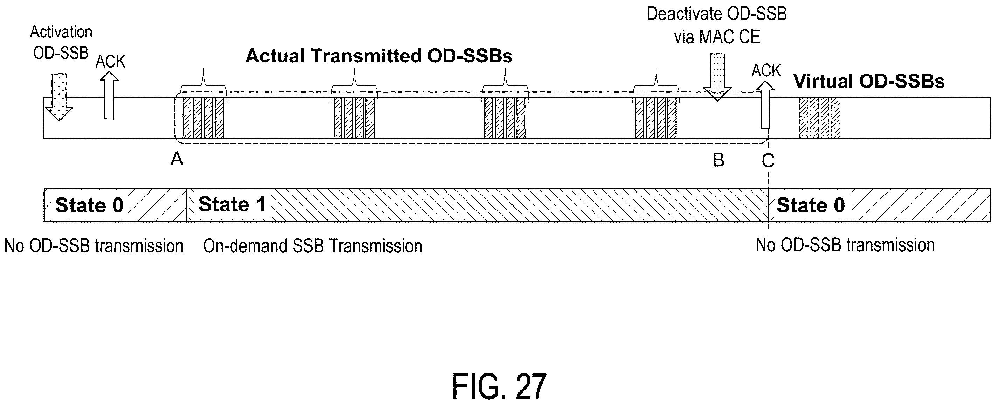

For example, FIG. 27 is a schematic diagram illustrating an explicit deactivation mechanism for OD-SSB associated with a state according to an embodiment of the present disclosure. Referring to FIG. 27, at time instance A, the first actually transmitted SSB is transmitted. At time instance B, a UE 120 receives a deactivation command of OD-SSB. At time instance C with O_{offset} equals to 0, the UE 120 feedbacks ACK corresponding to the deactivation command. The valid interval (State 1) is defined as [A, C).

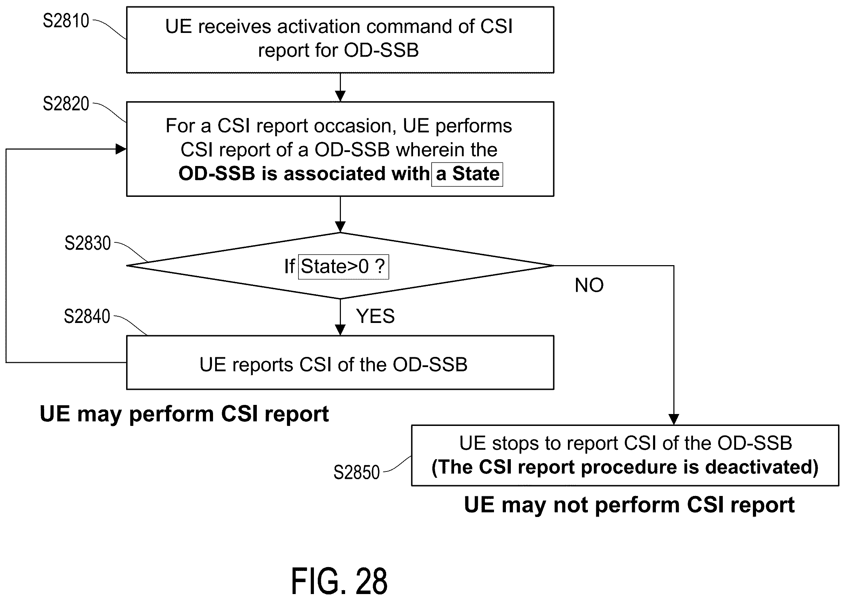

FIG. 28 is a flowchart illustrating a method of a mechanism for CSI report of OD-SSB by using a state according to an embodiment of the present disclosure. Referring to FIG. 28, in step S2810, the UE 120 receives an activation command of CSI report of OD-SSB. In step S2820, for a CSI report occasion, a UE 120 performs CSI report of a corresponding OD-SSB associated with a State. In step S2830, the UE 120 checks if State is a second state (or is State 1). If yes, in step S2840, the UE 120 reports CSI of the corresponding OD-SSB. That is, UE 120 may perform CSI report. If no, in step S2850, the UE 120 stop the report CSI of the OD-SSB (i.e., the CSI report procedure is deactivated). That is, the UE 120 may not perform CSI report.

In one embodiment, for explicit indication of deactivation for OD-SSB via MAC-CE for OD-SSB transmission indication, the CSI report occasion may be associated with a state. For a first state (e.g., State 0), there is no (updated) resource for CSI report. For a second state (e.g., State 1), there is (updated) resource for CSI report.

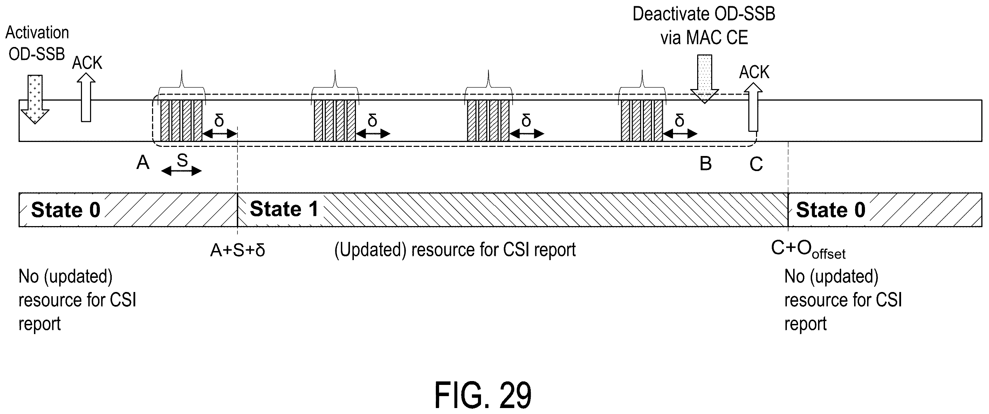

For example, FIG. 29 is a schematic diagram illustrating an explicit deactivation mechanism for OD-SSB associated with a state according to an embodiment of the present disclosure. Referring to FIG. 29, State 1 (Valid for Reporting) begins at time instance A + S + δ. δ is the minimum processing time of CSI measurement. There is an (updated) resource for CSI report for State 1. State 0 (Invalid) begins at time stance C + O_{offset}. O_{offset} is a fixed, preconfigured, or configurable value, for example, O_{offset} is larger than or equal to 0. There is no (updated) resource for CSI report for State 0.

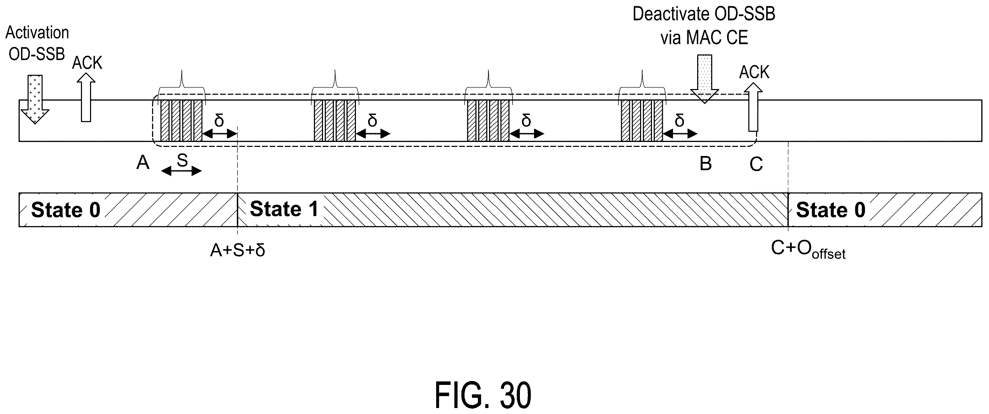

FIG. 30 is a schematic diagram illustrating an explicit deactivation mechanism for OD-SSB associated with a state according to an embodiment of the present disclosure. Referring to FIG. 30, at time instance A, the first actually transmitted SSB starts. At time instance B, UE 120 receives deactivation command of OD-SSB. At time instance C, UE 120 feedbacks ACK corresponding to the deactivation command. Within the interval of State 1 [A + S +δ, C+ O_{offset}), there is (updated) resource for CSI report. However, there is no (updated) resource for CSI report outside the interval of State 1.

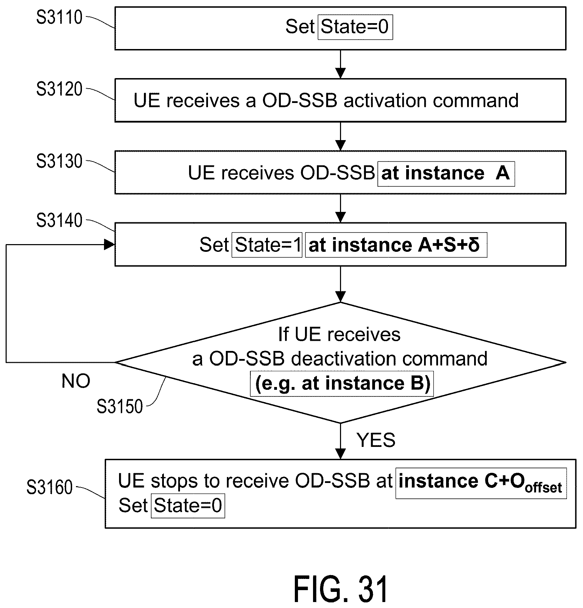

FIG. 31 is a flowchart illustrating a method of an explicit deactivation mechanism for OD-SSB associated with a state according to an embodiment of the present disclosure. Referring to FIG. 31, in step S3110, the UE 120 sets State = 0. In step S3120, the UE 120 receives an OD-SSB activation command. In step S3130, the UE 120 receives an OD-SSB at time instance A. In step S3140, the UE 120 sets State = 1 at time instance A + S + δ. In step S3150, the UE 120 determines if a deactivation command is received (e.g., at time instance B). If no, the UE 120 continues receive OD-SSB. If yes, in step S3160, the UE 120 stops receiving/reporting at time instance C + O_{offset} and sets State = 0.

In one embodiment, for an explicit indication of deactivation for OD-SSB via MAC-CE for OD-SSB transmission indication, the CSI report occasion may be associated with a state. For a first state (e.g., State 0), there is no (updated) resource for CSI report. For a second state (e.g., State 1), there is (updated) resource for CSI report.

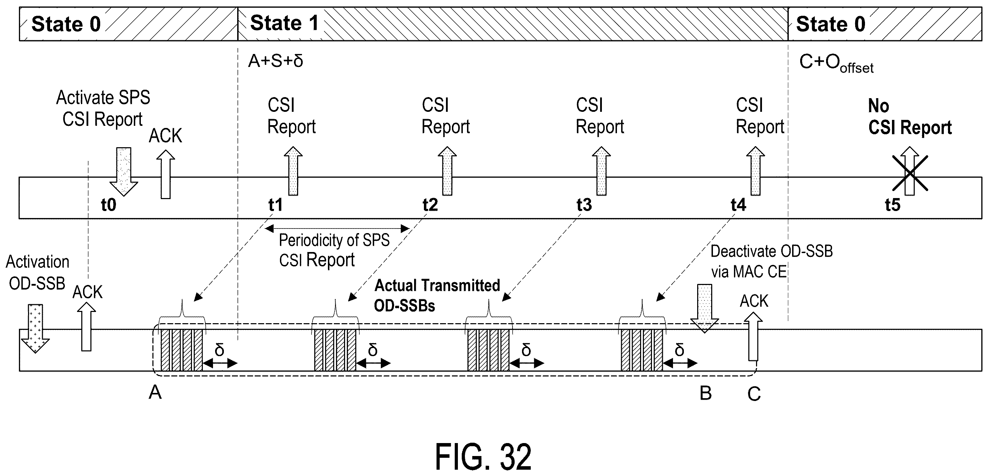

For example, FIG. 32 is a schematic diagram illustrating mechanism for CSI report of OD-SSB by using a state according to an embodiment of the present disclosure. Referring to FIG. 32, the activation of CSI Report occurs at time t0. CSI Reports at time t1 to t4 are transmitted because they fall within the interval of State 1 (A + S + δ to C + O_{offset}) corresponding to actual transmitted OD-SSBs. At time t5, the time is past the valid window (State 0 and corresponding to virtual OD-SSBs), there is no corresponding updated measurement resource, so no CSI report is sent.

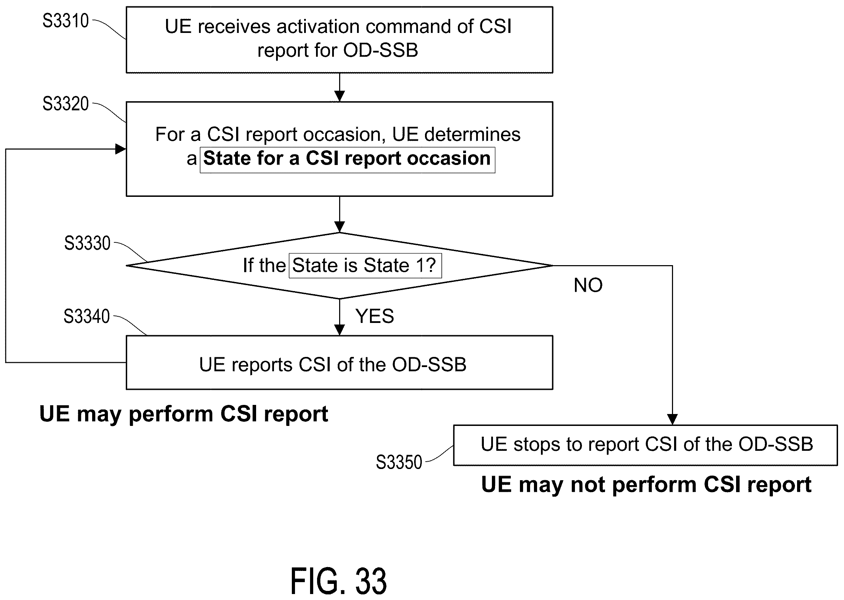

FIG. 33 is a flowchart illustrating a method of a mechanism for CSI report of OD-SSB by using a state according to an embodiment of the present disclosure. Referring to FIG. 33, in step S3310, the UE 120 receives an activation command of CSI report of OD-SSB. In step S3320, for a CSI report occasion, UE 120 determines a State for a CSI report occasion. In step S3330, the UE 120 checks if State is State 1. If yes, in step S3340, the UE 120 reports CSI of the OD-SSB. That is, UE 120 may perform CSI report. If no, in step S3350, the UE 120 stops the report CSI of the OD-SSB (i.e., the CSI report procedure is deactivated). That is, the UE 120 may not perform CSI report.

In one embodiment, for an explicit indication of deactivation for OD-SSB via MAC-CE for OD-SSB transmission indication, the CSI report occasion may be associated with a state. For a first state (e.g., State 0), there is no (updated) resource for CSI report. For a second state (e.g., State 1), there is (updated) resource for CSI report.

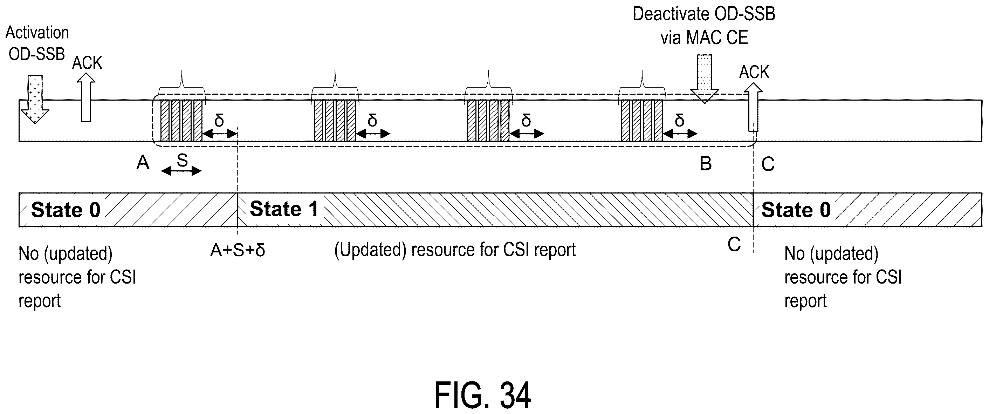

For example, FIG. 34 is a schematic diagram illustrating an explicit deactivation mechanism for OD-SSB associated with a state according to an embodiment of the present disclosure. Referring to FIG. 34, the interval of State 1 is defined as [A + S + δ to C). Any report occasion falling after time instance C corresponds to State 0 (No resource), and thus, the CSI report is stopped.

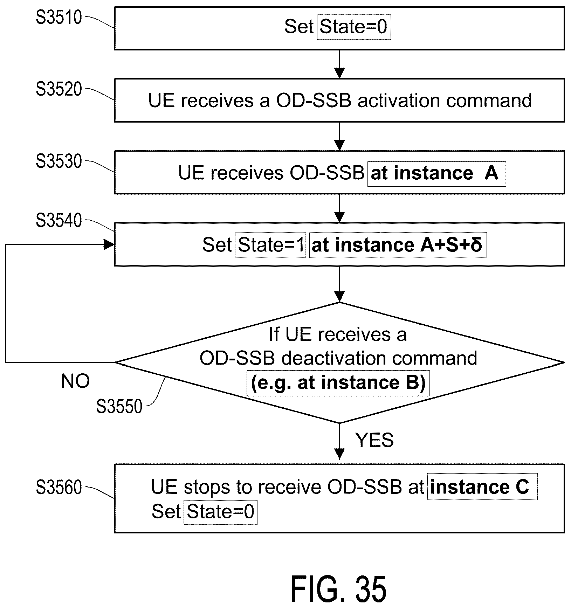

FIG. 35 is a flowchart illustrating a method of an explicit deactivation mechanism for OD-SSB associated with a state according to an embodiment of the present disclosure. Referring to FIG. 35, in step S3510, the State is set as 0. In step S3520, the UE 120 receives a OD-SSB activation command. In step S3520, the UE 120 receives an OD-SSB activation command. In step S3530, the UE 120 receives an OD-SSB at time instance A. In step S3540, the UE 120 sets State = 1 at time instance A + S + δ. In step S3550, the UE 120 determines if a deactivation command is received (e.g., at time instance B). If no, the UE 120 continues receive OD-SSB. If yes, in step S3560, the UE 120 stops receiving/reporting at time instance C and sets State = 0.

In one embodiment, for an explicit indication of deactivation for OD-SSB via MAC-CE for OD-SSB transmission indication, the CSI report occasion may be associated with a state. For a first state (e.g., State 0), there is no (updated) resource for CSI report. For a second state (e.g., State 1), there is (updated) resource for CSI report.

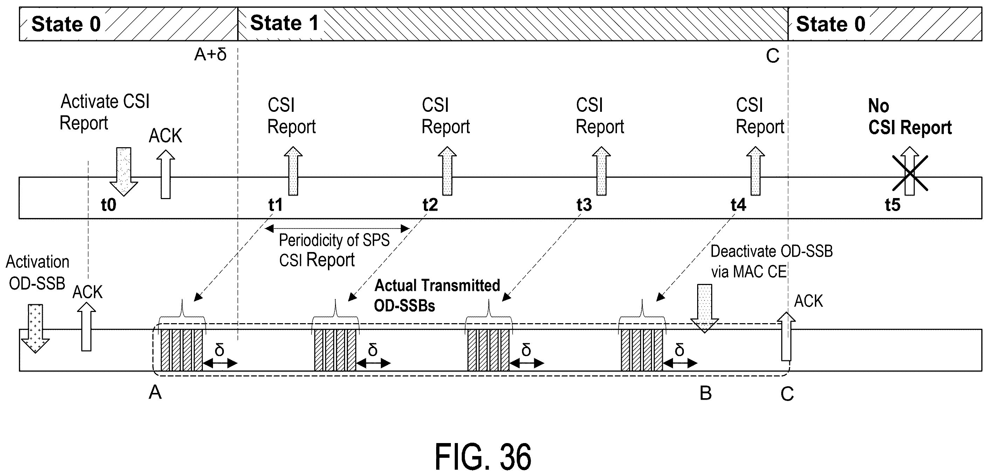

For example, FIG. 36 is a schematic diagram illustrating a mechanism for CSI report of OD-SSB by using a state according to an embodiment of the present disclosure. Referring to FIG. 36, the interval of State 1 is [A +δ, C). Here, the start time is simplified to A + δ (assuming S is negligible or included). The CSI reports from time t1 to t4 are valid for the actual transmitted OD-SSBs. The CSI report at time t5 is invalid for the virtual OD-SSBs without a resource for CSI report as it is after time instance C.

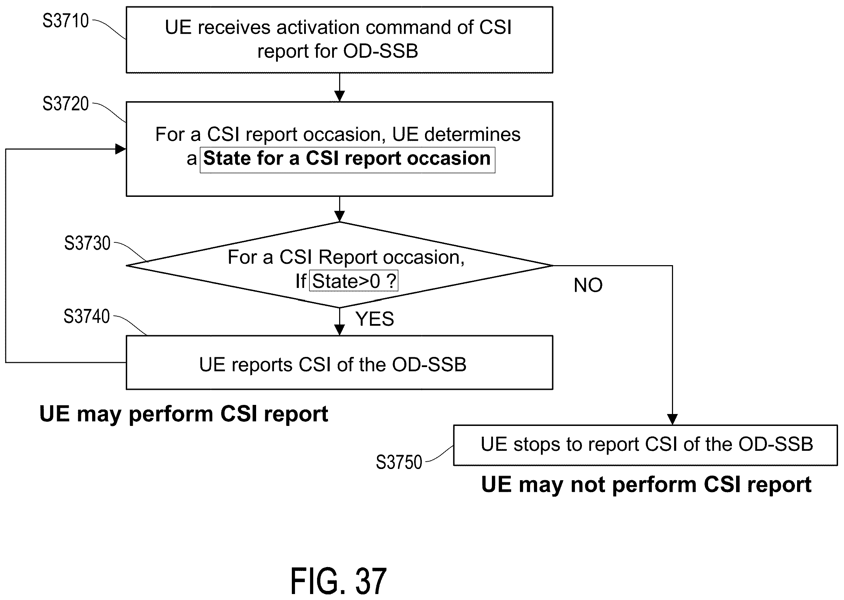

FIG. 37 is a flowchart illustrating a method of a mechanism for CSI report of OD-SSB by using a state according to an embodiment of the present disclosure. Referring to FIG. 37, in step S3710, UE 120 receives an activation command of CSI report of OD-SSB. In step S3720, for a CSI report occasion, the UE 120 determines a State. In step S3730, the UE 120 checks if State is a second state (or is State 1). If yes, in step S3740, the UE 120 reports CSI of the corresponding OD-SSB. That is, UE 120 may perform CSI report of the corresponding OD-SSB. If no, in step S3750, the UE 120 stops the report CSI of the corresponding OD-SSB (i.e., the CSI report procedure is deactivated). That is, the UE 120 may not perform CSI report if State is a first state (or is State 0).

In one embodiment, the CSI report may:
CSI report may not be transmitted or not updated, if the state of the corresponding OD-SSB is a first state (e.g., State 0);
CSI report may be transmitted if the state of the corresponding OD-SSB is a second state (e.g., State 1).

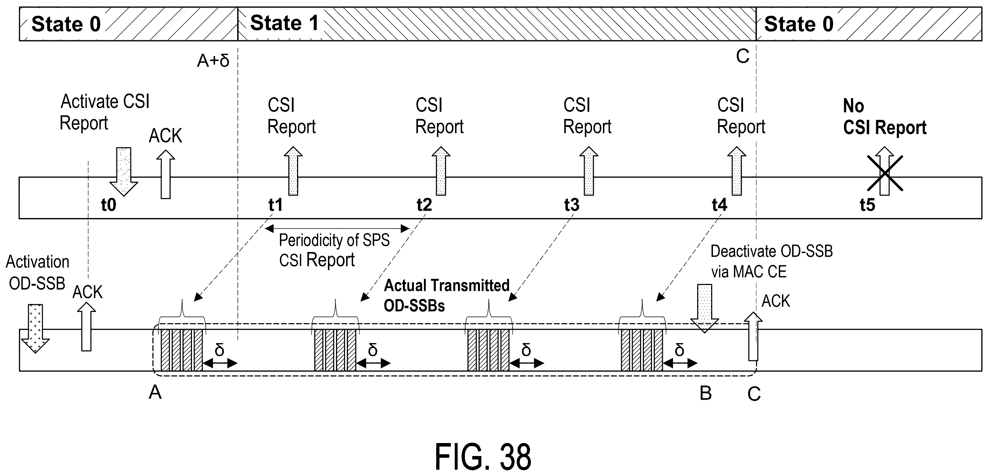

For example, FIG. 38 is a schematic diagram illustrating a mechanism for CSI report of OD-SSB by using a state according to an embodiment of the present disclosure. Referring to FIG. 38, the interval of State 1 is defined as [A + δ, C). Since time t1, t2, t3 and t4 are within this interval, the corresponding CSI report is sent. However, the CSI report at time t5 is invalid for the virtual OD-SSBs without a resource for CSI report as it is after time instance C (e.g., State 0).

In one embodiment, for a periodic CSI Report, UE may report its CSI according to: Proposal 1A:
CSI report may be transmitted/resumed/activated if the counter of a corresponding OD-SSB is not expired (counter>0).
CSI report may be muted/dropped/stopped/deactivated if the counter of a corresponding OD-SSB is expired (counter<=0).

### Proposal 1A':

CSI report may be muted/dropped/stopped/deactivated if the state for a corresponding OD-SSB is a first state (State 0).

CSI report may be transmitted/resumed/activated if the state for a corresponding OD-SSB is a second state (State 1).

### Proposal 1B:

CSI report may be muted/dropped/stopped/deactivated if the state for a corresponding 0OD-SSB is a first state (State 0).

CSI report may be transmitted/resumed/activated if the state for a corresponding OD-SSB is a second state (State 1).

### Proposal 1B':

CSI report may be muted/dropped/stopped/deactivated if state for a CSI report occasion is a first state (State 0).

CSI report may be transmitted/resumed/activated if state for a CSI report occasion is a second state (State 1).

In one embodiment, a UE 120 may receive a fourth signaling for providing configuration for a second SSB, receive a second transmission of the second SSB according to the fourth signaling, receive a first CSI report configuration, and receive a fifth signaling for activating a first CSI report corresponding to a first reported SSB configured by the first CSI report configuration, and transmit the first CSI report according to the fifth signaling. The fifth signaling may or may not be the same as the first signaling.

In one embodiment, the first reported SSB is determined as one of the first SSB and the second SSB according to a priority of the first SSB and the second SSB.

In one embodiment, the first reported SSB is predefined as one of the first SSB and the second SSB.

In one embodiment, the first reported SSB is configurable by receiving a sixth signaling for configuring the first reported SSB.

In one embodiment, the first reported SSB is a nearest valid SSB between the first SSB and the second SSB.

In one embodiment, the fourth signaling is indicated or provided by DCI, RRC configuration, or MAC-CE; and/or the fifth signaling is indicated or provided by DCI, RRC configuration, or MAC-CE.

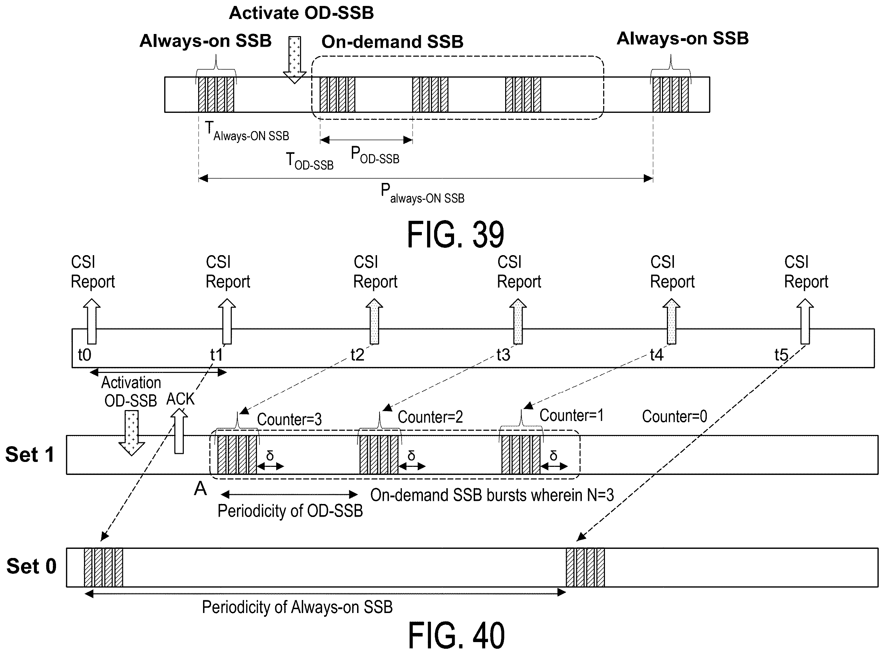

FIG. 39 is a schematic diagram illustrating the periodicity relationship between On-demand SSB and Always-on SSB according to an embodiment of the present disclosure. Referring to FIG. 39, both SSB types, which are On-demand SSB and Always-on SSB, coexist. P_{Always-ON SSB} is the periodicity for Always-ON SSB (typically longer). P_{OD-SSB} is the periodicity for On-demand SSB (typically shorter). T_{Always-ON SSB} is the Position of previous Always-on SSB. T_{OD-SSB} is the starting position of OD-SSB.

In one embodiment, there is no restriction on the time difference between T_{Always-ON SSB} and T_{OD-SSB}. A single CSI report configuration is configured, where the CSI resources may come from both always-on SSB and on-demand SSB.

In one embodiment, there is a time difference between T_{Always-ON SSB} and T_{OD-SSB} restricted to be a multiple of P_{OD-SSB} (e.g., K* P_{OD-SSB}, where K is an integer equal to 1 and/or larger than 1). A separate CSI report configuration is configured, where for each configuration, the CSI resources may come from either always-on SSB or on-demand SSB.

In one embodiment, for the single CSI report configuration where CSI resources comes from both always-on SSB and on-demand SSB, there may be different Priority among different types of SSB. UE 120 may transmit CSI report according to one of the first set SSB (e.g., Always-ON SSB) and the second set of SSB (e.g., on-demand SSB).

In one embodiment, for the single CSI report configuration where CSI resources comes from both always-on SSB and on-demand SSB, there may be the same Priority among different types of SSB. UE 120 may transmit CSI report according to both of the first set SSB (e.g., Always-ON SSB) and the second set of SSB (e.g., on-demand SSB).

In one embodiment, for the single CSI report configuration where CSI resources comes from both always-on SSB and on-demand SSB,
UE 120 receives a CSI report configuration. The CSI report configuration may comprise at least one a first set of SSB (e.g., always-on SSB, with a first index) and a second set of SSB (e.g., on-demand SSB, with a second index)
Before time instance A (OD-SSB is not activated), UE 120 transmits CSI report according to the first set of SSB (e.g., always-on SSB) of the SSB Group.
During time instance A~ time instance B (OD-SSB is activated),
Proposal 2A-1: UE 120 transmits CSI report according to the second set of SSB (e.g., OD-SSB) of the SSB Group (e.g., the second set of SSB has higher priority, e.g., higher or lower Resource/set index).
Proposal 2A-2: UE 120 transmits CSI report according to the nearest valid resource of first set of SSB (e.g., always-on SSB) of the SSB Group or the second set of SSB (e.g., OD-SSB) of the SSB Group (e.g., the same priority).
After time instance B (OD-SSB is deactivated), UE 120 transmits CSI report according to the first set of SSB (e.g., always-on SSB) of the SSB Group.

In one embodiment, for the single CSI report configuration where CSI resources comes from both always-on SSB (Set 0) and on-demand SSB (Set 1) with different priorities, the set index is related to the priorities of CSI report; e.g., the higher set index with higher priority for CSI report. [Implicitly Indicated]. In another embodiment, UE 120 may receive priorities of CSI resource sets from network. [Explicitly Indicated].

For example, FIG. 40 is a schematic diagram illustrating CSI report with different priorities according to an embodiment of the present disclosure. Referring to FIG. 40, before time instance A, the UE 120 reports based on Set 0 (Always-on SSB, lower priority). Upon activation of OD-SSB (Set 1, higher priority) at time instance A, the UE 120 switches to report based on Set 1. The counters (e.g., Counter = 3, 2, 1) track the OD-SSB bursts. Once the OD-SSB bursts are exhausted (Counter = 0), the UE 120 switches back to report based on Set 0 (Always-on SSB).

In one embodiment, in case A, when a UE 120 receives an activation command for OD-SSB, for a CSI report occasion after time instance A+offset, if the counter and/or state of a SSB corresponding to the CSI report occasion >0, the UE 120 may perform CSI measurement/report according to the second set of SSB (e.g., OD-SSB). The offset can be higher layer configure or fixed value >=0. In one embodiment, in case B, otherwise, UE may perform CSI measurement/report according to the first set of SSB (e.g., Always-ON SSB).

In one embodiment, for a single CSI report configuration where CSI resources come from both always-on SSB (Set 0) and on-demand SSB (Set 1) with the same priority, a UE 120 may report the CSI of the nearest valid SSB resource.

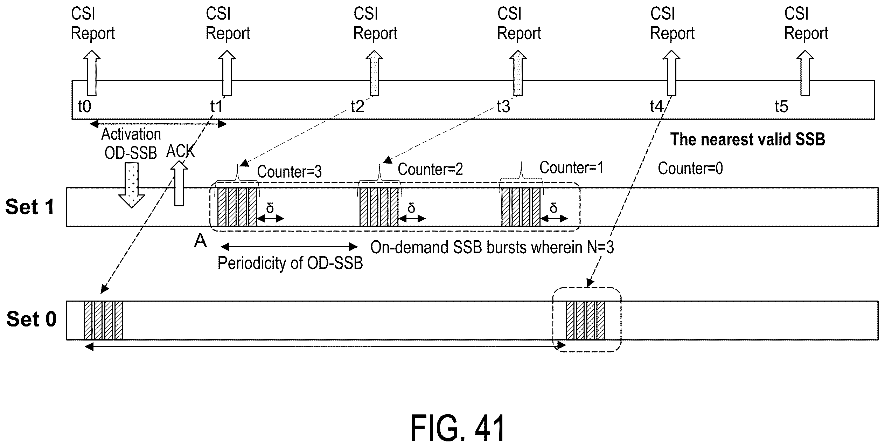

For example, FIG. 41 is a schematic diagram illustrating CSI report with the same priority according to an embodiment of the present disclosure. Referring to FIG. 41, both Set 0 and Set 1 have equal standing. For any given reporting occasion (e.g., time t4), the UE 120 selects the "Nearest Valid SSB" resource. If an OD-SSB burst is closer and valid, it is used. If an Always-on SSB is closer, it is used.

In one embodiment, the single CSI report configuration may be configured with a reporting type: {Periodic, SPS, SPS-like, Aperiodic, Event-Trigger, UE-initiate}. CSI report may be triggered by DCI (Aperiodic, one-shot report).

In one embodiment, a UE 120 may receive a seventh signaling for providing configuration for a second SSB, receive a second transmission of the second SSB according to the seventh signaling, receive a first CSI report configuration, receive a second CSI report configuration, transmit a first CSI report corresponding to the first SSB and configured by the first CSI report configuration, and transmit a second CSI report corresponding to the second SSB and configured by the second CSI report configuration.

In one embodiment, a UE 120 may transmit the first CSI report corresponding to the first SSB and configured by the first CSI report configuration in response to the first CSI report being activated, and stop transmitting the first CSI report in response to the first CSI report being not activated.

In one embodiment, a UE 120 may receive a second CSI report configuration, and transmit a second CSI report corresponding to the second SSB and configured by the second CSI report configuration in response to the first CSI report being not transmitted.

In one embodiment (Proposal 2B), a separate CSI report configuration is provided, wherein CSI resources come from either always-on SSB or on-demand SSB.
Proposal 2B-1: Only one CSI report can be transmitted if OD-SSB is transmitted (e.g., UE transmits CSI report according to the second configuration of SSB (e.g., OD-SSB) due to higher priority).
Proposal 2B-2: More than one CSI report can be transmitted (e.g., UE transmits CSI report according to both the first configuration of SSB (e.g., Always-On SSB) and the second configuration of SSB (e.g., OD-SSB)).

In one embodiment (Proposal 2B), a separate CSI report configuration is provided, wherein CSI resources come from either always-on SSB or on-demand SSB.
Proposal 2B-1: Only one CSI report configuration can be transmitted (e.g., Different Priorities) UE receives a configuration for a SSB Group/Pair, where
the SSB Group/Pair comprises at least a first configuration of SSB (e.g., always-on SSB) and a second configuration of SSB (e.g., OD-SSB).
If CSI report of OD-SSB is not transmitted/activated, CSI report based on the default configuration of SSB (e.g., the first configuration of SSB (e.g., always-on SSB)).
If CSI report of OD-SSB is transmitted/activated, CSI report based on the configuration of SSB with higher priority (e.g., the second configuration of SSB (e.g., OD-SSB)).
Proposal 2B-2: More than one CSI report configuration can be transmitted (e.g., The Same Priority).

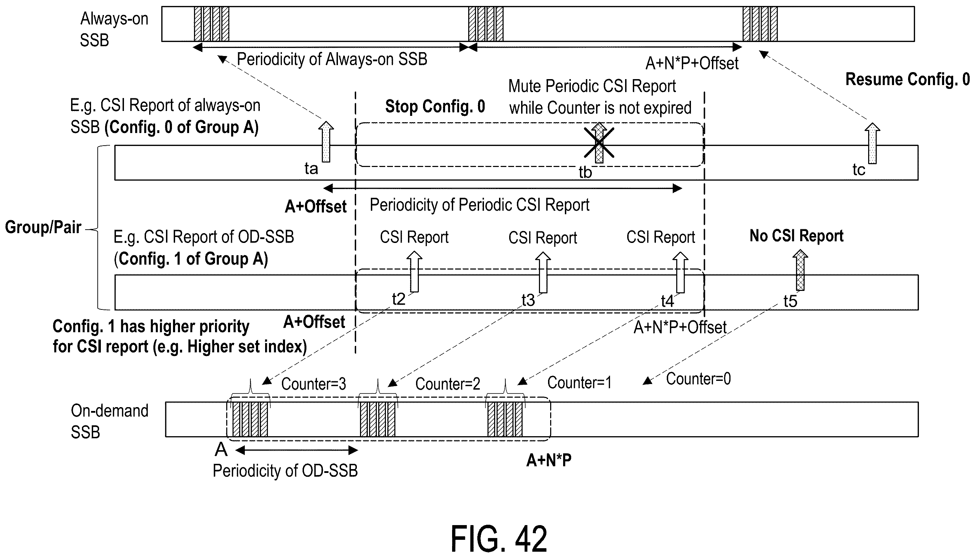

For example, FIG. 42 is a schematic diagram illustrating CSI report by using a counter for only one CSI report configuration at the same time according to an embodiment of the present disclosure. Referring to FIG. 42, regarding proposal 2B-1, the UE 120 is configured with multiple CSI report configurations, for example, a first configuration (Config. 0) associated with a first set of SSB (e.g., Always-on SSB) and a second configuration (Config. 1) associated with a second set of SSB (e.g., OD-SSB). The Config. 1 (OD-SSB) has a higher priority than Config. 0 (Always-on SSB). The switching between configurations is controlled by the Counter of the OD-SSB. At the time interval where Counter > 0 (e.g., Counter = 3, 2, 1): The OD-SSB is valid. The UE 120 transmits the CSI report according to Config. 1. Simultaneously, the UE 120 may stop, drop, or deactivate the CSI report for Config. 0 to save resources or avoid collision. At the time interval where Counter is less than or equal to 0 (e.g., Counter = 0): The OD-SSB transmission ends. The UE 120 stops transmitting the CSI report according to Config. 1. Simultaneously, the UE 120 resumes or transmits the CSI report according to Config. 0.

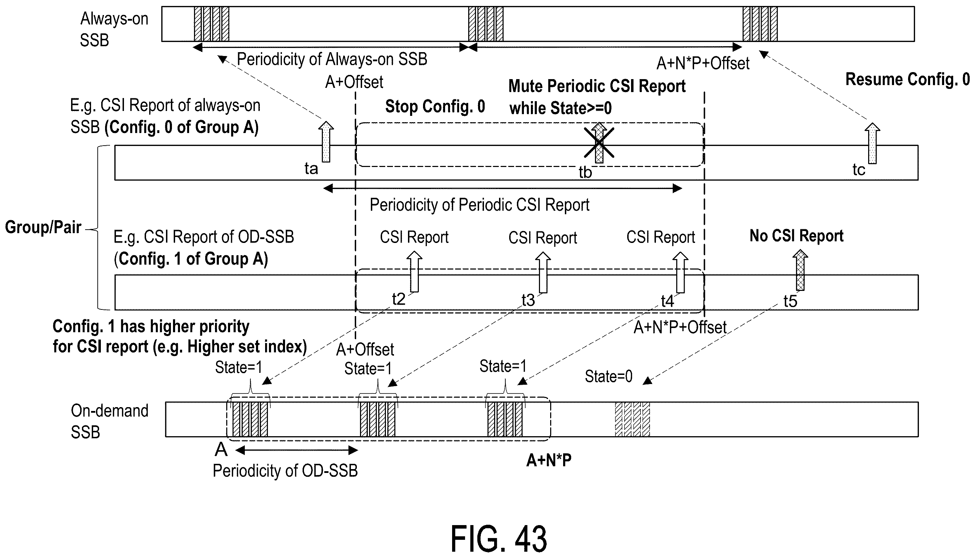

FIG. 43 is a schematic diagram illustrating CSI report by using a state for only one CSI report configuration at the same time according to an embodiment of the present disclosure. Referring to FIG. 43, regarding proposal 2B-1, the switching is controlled by the State of the OD-SSB. In State 1 (Active OD-SSB): The UE 120 transmits the CSI report for the high-priority Config. 1 (OD-SSB) and stops/drops the CSI report for Config. 0 (Always-on SSB). In State 0 (Inactive OD-SSB): The UE 120 stops the CSI report for Config. 1 and transmits/resumes the CSI report for Config. 0. From time t2 to t4 (State 1), only the OD-SSB report is sent. At time t5 (State 0), the Always-on SSB report resumes, but no CSI report of OD-SSB.

In one embodiment, in case A, when a UE 120 receives an activation command for OD-SSB, for a CSI report occasion after time instance A+offset,
If the counter and/or state of a SSB corresponding to the CSI report occasion >0, UE may perform CSI measurement/report according to Config. 1 of Group A (OD-SSB).
If the counter and/or state of a SSB corresponding to the CSI report occasion <=0, UE may muted/dropped/stopped/deactivated CSI measurement/report according to Config. 0 of Group A (Always-on SSB). In one embodiment, in case B, otherwise, UE 120 may perform CSI measurement/report according to Config. 0 of Group A (Always-on SSB).

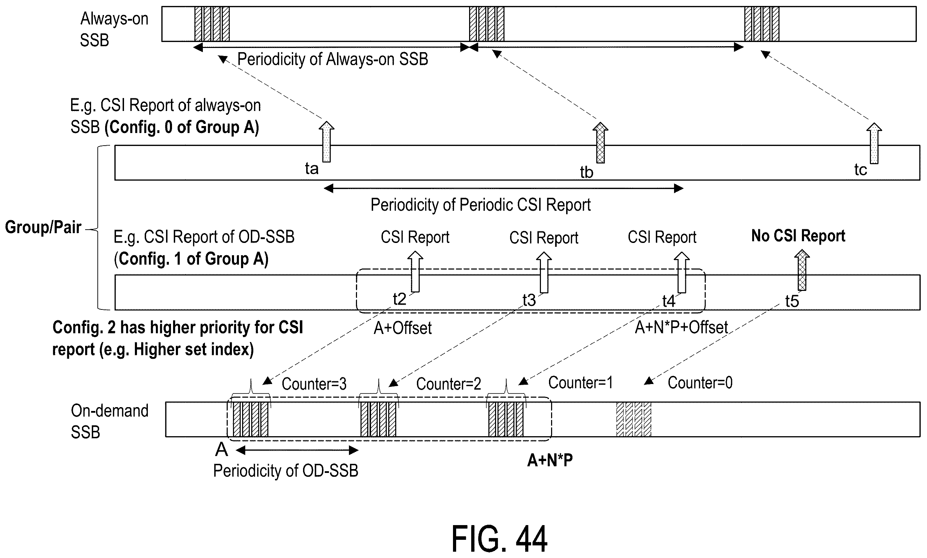

For example, FIG. 44 is a schematic diagram illustrating CSI report by using a counter for more than one CSI report configuration at the same time according to an embodiment of the present disclosure. Referring to FIG. 44, regarding proposal 2B-2, the UE 120 checks the Counter for the specific CSI report occasion. If the occasion corresponds to Config. 1 and Counter is larger than 0, the CSI report of OD-SSB is transmitted. If the occasion corresponds to Config. 1 and Counter less than or equal to 0, the CSI report of OD-SSB is not transmitted. However, UE 120 performs CSI measurement/report according to Config. 0 of Group A for Always-on SSB.

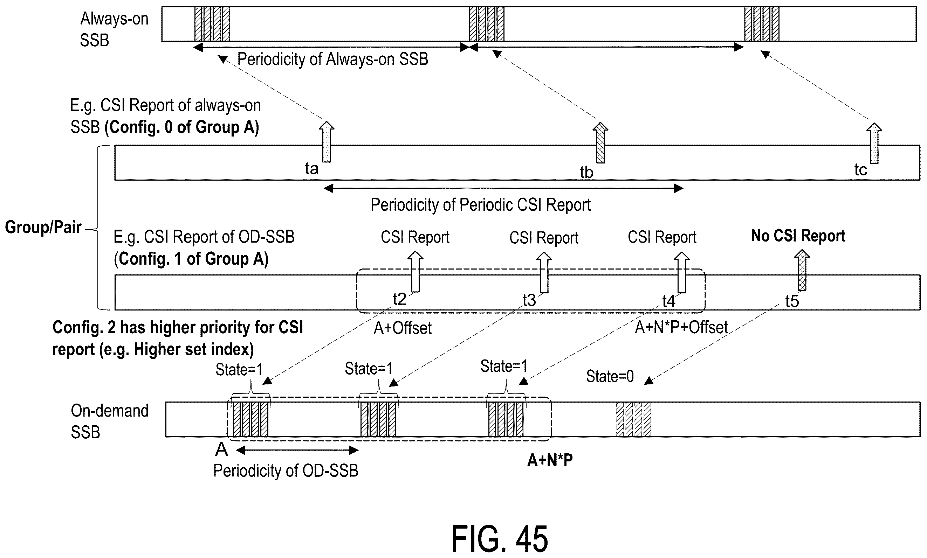

FIG. 45 is a schematic diagram illustrating CSI report by using a state for more than one CSI report configuration at the same timeaccording to an embodiment of the present disclosure. Referring to FIG. 45, regarding proposal 2B-2, the UE 120 checks the State for the specific CSI report occasion. If the occasion corresponds to Config. 1 and the State is State 1, the CSI report of OD-SSB is transmitted. If the occasion corresponds to Config. 1 and the State is State 0, the CSI report of OD-SSB is not transmitted. However, UE 120 perform CSI measurement/report according to Config. 0 of Group A for Always-on SSB.

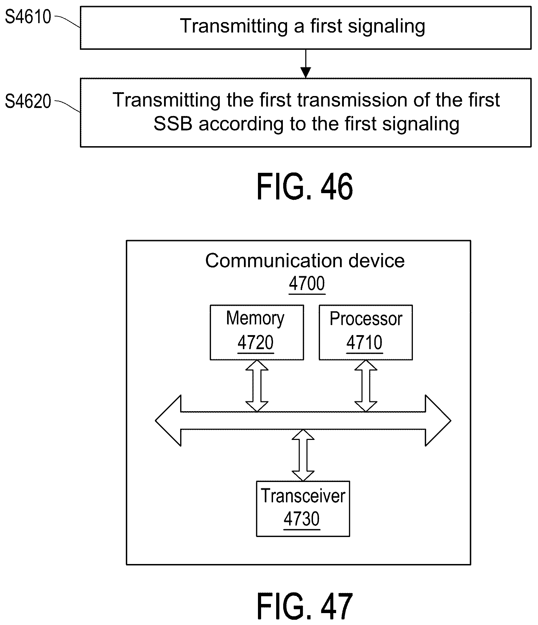

FIG. 46 is a flowchart illustrating a method of communication operation according to an embodiment of the present disclosure. The method may be performed by a network device 110. Referring to FIG. 46, in step S510, the network device 110 transmits a first signal. In step S4620, the network device 110 transmits the first transmission of the first SSB according to the first signaling. A detailed description could refer to the above embodiment.

FIG. 47 is a block diagram illustrating a communication device according to an embodiment of the present disclosure. Referring to FIG. 47, the communication device 4700 may be a UE or a network device. The communication device 4700 may include, but is not limited to, a processor 4710. The processor 4710 (e.g., having processing circuitry) may include an intelligent hardware device, or be implemented as a central processing unit (CPU), microprocessor unit (MPU), a microcontroller (MCU), system on chip (SoC), digital signal processor (DSP), graphics processing unit (GPU), deep-learning processing unit (DPU), neural network processing unit (NPU), tensor processing unit (TPU), application specific integrated circuit (ASIC), programmable logic device (PLD), or field programmable gate array (FPGA), but the disclosure is not limited thereto. The processor 4710 may call and run a computer program from memory to implement the method in the embodiment of the disclosure.

Optionally, the communication device 4700 may further include a memory 4720. Optionally, the communication device 4700 may further include a transceiver 4730, and the processor 4710 may control the transceiver 4730 to communicate with other devices.

Optionally, the communication device 4700 may specifically be a mobile terminal, a terminal device, an NTN terminal, or a UE in an embodiment of the disclosure, and the communication device 4700 may implement the corresponding process implemented by the mobile terminal, the terminal device, or the UE in various methods in the embodiment of the disclosure. For conciseness, a related description is omitted.

## Claims

1. A method of communication operation performed by a user equipment, UE, (120, 4700), the method comprising:
receiving a first signaling for activating a first transmission of a first Synchronization Signal/ Physical Broadcast Channel Block, SSB; and
receiving the first transmission of the first SSB according to the first signaling.

2. The method of claim 1, further comprising:
receiving a second signaling for deactivating the first transmission of the first SSB; and
stopping receiving the first transmission of the first SSB according to the second signaling.

3. The method of claim 1 or claim 2, further comprising:
determining a first number of SSB burst; and
stopping receiving the first transmission of the first SSB until the first number of SSB burst is received.

4. The method of any one of claims 1-3, wherein the first signaling is indicated or provided by downlink control information, DCI, radio resource control, RRC, configuration, or media access control-control element, MAC-CE.

5. The method of claim 2, wherein the second signaling is indicated or provided by DCI, RRC configuration, or MAC-CE.

6. The method of claim 3, wherein determining the first number of SSB burst comprises:
determining the first number of SSB burst indicated or provided by DCI, RRC configuration, or MAC-CE.

7. The method of any one of claims 1-6, further comprising:
receiving a first channel state information, CSI, report configuration;
receiving a third signaling for activating a first CSI report corresponding to the first SSB and configured by the first CSI report configuration; and
transmitting a first CSI report according to the third signaling.

8. The method of any one of claims 1-6, further comprising:
setting a counter of the first SSB for counting a number of SSB burst;
in response to the counter of the first SSB being expired, stop receiving the first transmission of the first SSB; and
in response to the counter of the first SSB being not expired, receiving the first transmission of the first SSB.

9. The method of any one of claims 1-6, further comprising:
setting a counter of the first SSB for counting a number of SSB burst;
transmitting a first CSI report corresponding to the first SSB, in response to the counter of the first SSB being not expired; and
stop transmitting the first CSI report corresponding to the first SSB, in response to the counter of the first SSB being expired.

10. The method of any one of claims 1-6, further comprising:
setting a state of the first SSB for counting a number of SSB burst;
in response to the state of the first SSB being a first state, stop receiving the first transmission of the first SSB; and
in response to the state of the first SSB being a second state, receiving the first transmission of the first SSB.

11. The method of any one of claims 1-6, further comprising:
setting a state of the first SSB for counting a number of SSB burst;
stop transmitting a first CSI report corresponding to the first SSB, in response to the state of the first SSB being a first state; and
transmitting the first CSI report corresponding to the first SSB, in response to the state of the first SSB being a second state.

12. The method of any one of claims 1-11, further comprising:
receiving a fourth signaling for providing configuration for a second SSB;
receiving a second transmission of the second SSB according to the fourth signaling;
receiving a first CSI report configuration;
receiving a fifth signaling for activating a first CSI report corresponding to a first reported SSB configured by the first CSI report configuration, and
transmitting the first CSI report according to the fifth signaling.

13. The method of claim 12, wherein the first reported SSB is determined as one of the first SSB and the second SSB according to a priority of the first SSB and the second SSB.

14. The method of claim 12, wherein the first reported SSB is predefined as one of the first SSB and the second SSB.

15. The method of claim 12, wherein the first reported SSB is configurable by receiving a sixth signaling for configuring the first reported SSB.

16. The method of claim 12, wherein the first reported SSB is a nearest valid SSB between the first SSB and the second SSB.

17. The method of claim 12, wherein
the fourth signaling is indicated or provided by DCI, RRC configuration, or MAC-CE; and/or
the fifth signaling is indicated or provided by DCI, RRC configuration, or MAC-CE.

18. The method of any one of claims 1-17, further comprising:
receiving a seventh signaling for providing configuration for a second SSB;
receiving a second transmission of the second SSB according to the seventh signaling;
receiving a first CSI report configuration;
receiving a second CSI report configuration;
transmitting a first CSI report corresponding to the first SSB and configured by the first CSI report configuration; and
transmitting a second CSI report corresponding to the second SSB and configured by the second CSI report configuration.

19. The method of claim 12, further comprising:
transmitting the first CSI report corresponding to the first SSB and configured by the first CSI report configuration in response to the first CSI report being activated; and
stopping transmitting the first CSI report in response to the first CSI report being not activated.

20. The method of claim 19, further comprising:
receiving a second CSI report configuration; and
transmitting a second CSI report corresponding to the second SSB and configured by the second CSI report configuration in response to the first CSI report being not transmitted.

21. A user equipment, UE (120, 4700), comprising:
a transceiver (4730); and
a processor (4710), coupled to the transceiver (4730) and configured to perform:
receiving, through the transceiver (4730), a first signaling for activating a first transmission of a first Synchronization Signal/ Physical Broadcast Channel Block, SSB; and
receiving, through the transceiver (4730), the first transmission of the first SSB according to the first signaling.

22. A method of communication operation performed by a network device (110, 4700), the method comprising:
transmitting a first signaling for activating a first transmission of a first Synchronization Signal/ Physical Broadcast Channel Block, SSB; and
transmitting the first transmission of the first SSB according to the first signaling.
